# EUROPEAN PATENT SPECIFICATION

(11) **EP 3 724 463 B1**
(45) Date of publication and mention of the grant of the patent: **31.01.2024**
(21) Application number: 18887577.7
(22) Date of filing: 13.12.2018
(51) Int. Cl.: F01M 1/08, F01M 1/16, F16N 7/34, F16N 7/38, F16N 13/06

(54) **AN INJECTOR FOR A LARGE SLOW-RUNNING TWO-STROKE ENGINE AND METHOD OF LUBRICATING SUCH ENGINE, AS WELL AS SUCH ENGINE**
EIN INJEKTOR FÜR EINEN GROSSEN, LANGSAM LAUFENDEN ZWEITAKTMOTOR UND VERFAHREN ZUM SCHMIEREN EINES SOLCHEN MOTORS, SOWIE EIN SOLCHER MOTOR
UN INJECTEUR POUR UN GROS MOTEUR LENT À DEUX TEMPS ET PROCÉDÉ DE LUBRIFICATION D'UN TEL MOTEUR, AINSI QU'UN TEL MOTEUR

(30) Priority: 13.12.2017 DK PA201770936; 13.12.2017 DK PA201770940
(43) Date of publication of application: 21.10.2020
(60) Divisional application: 21177105.0
(73) Proprietor: Hans Jensen Lubricators A/S, 9560 Hadsund (DK)
(72) Inventor: BAK, Peer, 9300 Sæby (DK)
(74) Representative: Patrade A/S
(86) International application number: PCT/DK2018/050353
(87) International publication number: WO 2019/114903

(56) References cited:
- EP-A2- 0 049 603
- EP-A2- 1 426 571
- EP-A2- 1 426 571
- WO-A2-2012/126473
- WO-A2-2012/126473
- CN-A- 1 183 509
- CN-A- 101 251 068
- DE-A1-102010 023 876
- JP-A- H0 230 914
- US-A- 5 297 777
- US-A1- 2012 007 009

## Description

### FIELD OF THE INVENTION

The present invention relates to a lubricant injector, a large slow-running two-stroke engine and a method of lubricating a large slow-running two-stroke engine.

The lubricant injector is defined in the preamble of claim 1. The large slow-running two-stroke engine is defined in the preamble of claim 4. The method of lubricating a large slow-running two-stroke engine is defined in the preamble of claim 7.

### BACKGROUND OF THE INVENTION

Due to the focus on environmental protection, efforts are on-going with respect reduction of emissions from marine engines. This also involves the steady optimization of lubrication systems for such engines, especially due to increased competition. One of the economic aspects gaining increased attention is a reduction of oil consumption, not only because of environmental protection but also because this is a significant part of the operational costs of ships. A further concern is proper lubrication despite reduced lubricant volume because the longevity of engines should not be compromised by the reduction of oil consumption. Thus, there is a need for steady improvements with respect to lubrication.

For lubricating of large slow-running two-stroke marine diesel engines, several different systems exist, including injection of lubrication oil directly onto the cylinder liner or injection of oil quills to the piston rings.

An example of a lubricant injector for a marine engine is disclosed in EP1767751, in which a non-return valve is used to provide the lubricant access to the nozzle passage inside the cylinder liner. The non-return valve comprises a reciprocating spring-pressed ball in a valve seat just upstream of the nozzle passage, where the ball is displaced by pressurised lubricant. The ball valve is a traditional technical solution, based on a principle dating back to the start of the previous century, for example as disclosed in GB214922 from 1923.

An alternative and relatively new lubrication method, compared to traditional lubrication, is commercially called Swirl Injection Principle (SIP). It is based on injection of a spray of atomized droplets of lubricant into the scavenging air swirl inside the cylinder. The helically upwards directed swirl results in the lubricant being pulled towards the Top Dead Centre (TDC) of the cylinder and pressed outwards against the cylinder wall as a thin and even layer. This is explained in detail in international patent applications WO2010/149162 and WO2016/173601. The injectors comprise an injector housing inside which a reciprocating valve member is provided, typically a valve needle. The valve member, for example with a needle tip, closes and opens the lubricant's access to a nozzle aperture according to a precise timing. In current SIP systems, a spray with atomized droplets is achieved at a pressure of, typically, 35-40 bars, which is substantially higher than the oil pressure of less than 10 bars that are used for systems working with compact oil jets that are introduced into the cylinder. In some types of SIP valves, the high pressure of the lubricant is also used to move a spring-loaded valve member against the spring force away from the nozzle aperture such that the highly pressurised oil is released therefrom as atomized droplets. The ejection of oil leads to a lowering of the pressure of the oil on the valve member, resulting in the valve member returning to its origin and remaining there until the next lubricant cycle where highly pressurized lubricant is supplied to the lubricant injector again.

In such large marine engines, a number of injectors are arranged in a circle around the cylinder, and each injector comprises one or more nozzle apertures at the tip for delivering lubricant jets or sprays into the cylinder from each injector. Examples of SIP lubricant injector systems in marine engines are disclosed in international patent applications WO2002/35068, WO2004/038189, WO2005/124112, WO2010/149162, WO2012/126480, WO2012/126473, WO2014/048438, and WO2016/173601.

The above mentioned WO2012/126473 and WO2016/173601, and also EP1426571 and EP1586751 disclose electromechanical outlet-valves at the nozzle. An electrical coil exerts an electromagnetic force on the outlet-valve member, which is equipped with a correspondingly electromagnetic responsive part. At excitation, the outlet-valve member is withdrawn from its valve seat at the nozzle aperture and opens for flow of lubricant from a lubricant source and passing the valve member and out of the nozzle. In practice, the outlet-valve member with the electromechanical responsive part is relatively long and has a mass that causes a slight delay in the action on the outlet-valve member.

Whereas these systems use electromechanical actuation of the outlet-valve member, it is also possible to use oil pressure to push back the outlet-valve member from the valve seat. An example is disclosed in EP1426571 in which an electromechanical pilot valve is used for providing a pilot pressure behind the outlet-valve member in order to open and close the outlet-valve at the nozzle aperture by toggling the pilot pressure behind the outlet-valve member. The toggling of the pilot pressure requires flow into and out of the volume behind the outlet-valve, which delays a prompt movement of the outlet-valve member. Compared to the electromechanical outlet-valve, this pilot-type valve also has the disadvantage of requiring a lubricant return line in order to empty the volume behind the valve member, which adds to costs and complexity of the system and increases the risk for leaks. Further, the pilot-type injection valve is sensitive against back pressure from the engine cylinder.

JP H02 30914 A discloses features defined in the preambles of claims 1 and 9. However, this prior art document does not disclose that the inlet-valve system comprises a movable electrically driven inlet-valve member.

However, for SIP injection, a precisely controlled timing is essential in addition to the objective of minimizing oil consumption. For this reason, SIP systems should be optimized for quick reactive response during injection cycles. Accordingly, a steady motivation for improvements exists.

EP 0049603 A2 discloses a cylinder lubrication whereas the system comprises an electrically driven inlet valve operated by the electro-magnetic device, and which is arranged in the lubricant flow pass between the lubricant inlet and an oil outlet. In the oil outlet a nozzle may be provided. EP 0049603 A2 does not relate to the SIP-principle having a lubricant pressure in the range of 25 bar to 100 bar. EP 0049603 A2 teaches a pressure up to 25 bar only.

### DESCRIPTION / SUMMARY OF THE INVENTION

It is therefore the objective of the invention to provide an improvement in the art. A particular objective is to provide a better speed and volume control of lubricant ejection by the injector to improve lubrication with SIP valves in a large slow-running two-stroke engine.

These objectives are achieved by an injector as defined in the characterizing clause of claim 1, a large slow-running two-stroke engine with a plurality of injectors as defined in the characterizing clause of claim 4, a method for lubricating a large slow-running two-stroke engine with a plurality of injectors as defined in the characterizing clause of claim 7 and as set forth in the following.

The injector is peculiar in that the inlet-valve system is arranged for SIP lubricant injections into the cylinder at a lubricant pressure in the range of 25 bar to 100 bar, that the inlet-valve system comprises a movable electrically driven inlet-valve member arranged for moving from an idle-phase position, in which the inlet-valve member in the idle-phase blocks the flow path, to an injection-phase position, in which the inlet-valve member opens the flow path for flow of lubricant through the flow path in the injection-phase and that the inlet-valve member is pre-stressed into an idle-phase position by an inlet-valve spring, wherein the inlet-valve system comprises an electrically-driven rigid displacement member for displacing the inlet-valve member from the idle-phase position to the injection-phase position against the force of the inlet-valve spring, wherein the displacement-member is a push-member arranged for pushing the inlet-valve member away from it idle-phase position against the force from the inlet-valve spring to its injection-phase position for lubricant injection in the injection-phase, wherein the displacement-member is not fastened to the inlet-valve member; wherein the displacement-member in the idle-state is provided at a distance from the inlet-valve member and arranged for acceleration towards the inlet-valve member for obtaining speed prior to impact onto the inlet-valve member for displacing the inlet-valve member from the inlet-valve seat by the impact.

The engine is peculiar in that each injector is an injector according to any of claims 1-3

The method is peculiar in that the inlet-valve system is arranged for SIP lubricant injections into the cylinder at a lubricant pressure in the range of 25 bar to 100 bar, that the inlet-valve system comprises a movable and electrically-driven rigid inlet-valve member arranged for moving from an idle-phase position, in which the inlet-valve member in the idle-phase blocks the flow path, to an injection-phase position, in which the inlet-valve member opens the flow path for flow of lubricant through the flow path in the injection-phase; the method comprising receiving a control signal from the controller by the inlet-valve system and as a consequence of the receipt of the control signal displacing the inlet-valve member from the idle-phase position to the injection-phase position for the injection-phase and causing flow of lubricant from the lubricant feed conduit through the lubricant inlet to the nozzle injection-phase and after the injection-phase retracting the displacement-member for causing the inlet-valve member to return to the idle-phase position and closing the lubricant supply from the lubricant inlet to the conduit injection-phaseand that the inlet-valve member is pre-stressed into an idle-phase position by an inlet-valve spring, wherein the inlet-valve system further comprises an electrically-driven rigid displacement member for displacing the inlet-valve member from the idle-phase position to the injection-phase position against the force of the spring, wherein the displacement-member is a push-member and the method comprises pushing the inlet-valve member away from the idle-phase position by the displacement-member against the force from the inlet-valve spring during lubricant injection, wherein the displacement-member is not fastened to the inlet-valve member; wherein the displacement-member in the idle-state is provided at a distance from the inlet-valve member; and wherein the method comprises by the control signal causing acceleration of the displacement-member towards the inlet-valve member, obtaining speed prior to impact with the inlet-valve member, and displacing the inlet-valve member from the idle-phase position by the impact, maintaining the inlet-valve member displaced from the idle-phase position for a predetermined period of time, and subsequently reversing the motion of the displacement-member and causing the inlet-valve member to return to the idle-phase position.

The large slow-running two-stroke engine comprises a cylinder with a reciprocal piston inside and with a plurality of injectors distributed along a perimeter of the cylinder for injection of lubricant into the cylinder at various positions on the perimeter during injection-phases. For example, the large slow-running two-stroke engine is a marine engine or a large engine in power plants. Typically, the engine is burning diesel or gas fuel, for example natural gas fuel.

The engine further comprises a controller. The controller is configured for controlling the amount and timing of the lubricant injection by the injectors during an injection-phase. Optionally, also the injection frequency is controlled by the controller. For precise injection, it is an advantage if the controller is electronically connected to a computer or comprises a computer, where the computer is monitoring parameters for the actual state and motion of the engine. Such parameters are useful for the control of optimized injection. Optionally, the controller is provided as an add-on system for upgrade of already existing engines. A further advantageous option is a connection of the controller to a Human Machine Interface (HMI) which comprises a display for surveillance and input panel for adjustment and/or programming of parameters for injection profiles and optionally the state of the engine. Electronic data connections are optionally wired or wireless or a combination thereof.

The term "injector" is used for an injection valve system comprising a housing with a lubricant inlet and one single injection nozzle with a nozzle aperture as a lubricant outlet and with a movable member inside the housing, which opens and closes access for the lubricant to the nozzle aperture. Although, the injector has a single nozzle that extends into the cylinder through the cylinder wall, when the injector is properly mounted, the nozzle itself, optionally, has more than a single aperture. For example, nozzles with multiple apertures are disclosed in WO2012/126480.

The term "injection-phase" is used for the time during which lubricant is injected into the cylinder by an injector. The term "idle-phase" is used for the time between injection-phases. The term "idle state" is used for the state of a component in the idle-phase. The term "idle-phase position" is used for the position of a movable component when in the idle state during the idle-phase, which is in contrast to an injection-phase position. The term "injection cycle" is used for the time it takes to start an injection sequence and until the next injection sequence starts. For example, the injection sequence comprises a single injection, in which case the injection cycle is measured from the start of the injection-phase to the start of the next injection-phase. The term "timing" of the injection is used for the adjustment of the start of the injection-phase by the injector relatively to a specific position of the piston inside the cylinder. The term "frequency" of the injection is used for the number of repeated injections by an injector per revolution of the engine. If the frequency is unity, there is one injection per revolution. If the frequency is 1/2, there is one injection per every two revolutions. This terminology is in line with the above mentioned prior art.

In a practical embodiment, the housing of the injector comprises a base with a lubricant inlet for receiving lubricant and comprises a flow chamber, typically a rigid cylindrical flow chamber, which rigidly connects the base with the nozzle. The flow chamber is hollow and, thus, allows lubricant to flow inside the flow chamber from the base to the nozzle. When the injector is mounted, the flow chamber extends through the cylinder wall of the engine so that the nozzle is held rigidly inside the cylinder by the flow chamber. Due to the base being provided at the opposite end of the flow chamber, it is typically located on or at the outer side of the cylinder wall. For example, the injector comprises a flange at the base for mounting onto the outer cylinder wall.

In order to fully understand the invention, it is pointed out that it has been discovered that lubricant conduits of a substantial length from a pumping system to the cylinder with the plurality of injectors introduce imprecision of the system. Long conduits tend to expand and retract slightly when being exposed to highly pressurised lubricant, which leads to slight uncertainties in timing and volume of injected lubricant. Furthermore, the lubricant is subject to minute compression and expansion during an injection cycle, which adds to the effect. Although, this effect is small, it introduces errors in the range of milliseconds for the injection, which is substantial in comparison to the short SIP injection time, which can be as short as 10 milliseconds or even below 1 millisecond. Such effect of imprecise timing has substantial influence on SIP lubrication systems due to the high lubricant pressure and the short injection periods. Also, it is noticed that the injection amount is typically regulated by the time length in which pressurised oil is supplied to the nozzle in an injection cycle, in which case, uncertainty factors that affect a precise timing should be minimised, if not eliminated. Improvement with respect to the injection is achieved with a system and method as described in the following with various embodiments and details.

For sake of convenience, the term "forward motion" is used for motion towards the nozzle aperture and the oppositely directed motion away from the nozzle aperture is called "rearward motion".

Each injector comprises a lubricant inlet for receiving lubricant from a lubricant feed conduit. Typically, the lubricant feed conduit is connected to a common lubricant supply system including a potential lubricant pump that raises the pressure of the lubricant to an adequate level. For the described system, it suffices to provide a constant lubricant pressure at the lubricant inlet of the injector.

Each of the injectors comprises an outlet-valve system at the nozzle configured for opening for flow of lubricant to the nozzle aperture during an injection-phase upon pressure rise above a predetermined limit at the outlet-valve system and for closing the outlet-valve system after the injection-phase when the pressure drops. The outlet-valve system closes off for back-pressure from the cylinder and also prevents lubricant to enter the cylinder in the idle-phase between injection-phases. In addition, the outlet-valve system assists in a short closing time after injection, adding to precision in timing and volume of injected lubricant.

For example, the outlet-valve system comprises an outlet non-return valve. In the outlet non-return valve, the outlet-valve member, for example a ball, ellipsoid, plate, or cylinder, is pre-stressed against an outlet-valve seat by an outlet-valve spring. Upon provision of pressurised lubricant in a flow chamber upstream of the outlet-valve system, the pre-stressed force of the spring is counteracted by the lubricant pressure, and if the pressure is higher than the spring force, the outlet-valve member is displaced from its outlet-valve seat, and the outlet non-return valve opens for injection of lubricant through the nozzle aperture into the cylinder. For example, the outlet-valve spring acts on the outlet-valve member in a direction away from the nozzle aperture, although, an opposite movement is also possible.

The injector comprises a lubricant flow path from the lubricant inlet to the outlet-valve system for flow of the lubricant from the lubricant inlet and to the nozzle, through the outlet-valve system and out of the injector at the nozzle aperture.

Whereas the above-mentioned WO2008/141650 and DE102013104822 disclose dosing remotely from the injectors, which leads to such imprecisions, the invention uses a different approach.

In order to solve the problem and achieve the objective of providing a better speed and volume control of lubricant ejection by the injector, each of the injectors comprises an electrically-driven inlet-valve system in addition to the outlet-valve system, wherein the inlet-valve system is electrically connected to the controller and arranged in the flow path between the lubricant inlet and outlet-valve system at the nozzle for regulating the lubricant that is dispensed through the nozzle aperture by opening or closing for lubricant flow from the lubricant inlet to the nozzle in dependence of an electrical control-signal received from the controller.

The inlet-valve system is arranged as part of the injector upstream of and spaced from the nozzle, and it is also arranged upstream of and spaced from the outlet-valve system.

The inlet-valve system of the injector doses the amount of lubricant for injection by the time the inlet-valve system stays open for the injection-phase. The time is determined by the controller.

Optionally, volume meters can be employed either for the total consumption of all the injectors on a cylinder or for a subgroup of injectors during the injection-phase.

For lubricating the engine, the method comprises sending an electrical control signal from the controller to the electrically-driven inlet-valve system and by the control signal causing the inlet-valve system to open for flow of lubricant from the lubricant feed conduit through the lubricant inlet, through the inlet-valve system, and into a conduit that flow-connects the inlet-valve system with the outlet-valve system. It is noted that the pressure of the lubricant in the lubricant feed conduit is above the predetermined limit that determines the opening of the outlet-valve system in order for the lubricant feed conduit to provide lubricant through the inlet-valve system with a pressure sufficiently high to open the outlet-valve system in the injection-phase. Accordingly, the lubricant flow through the inlet-valve system and into the conduit between the inlet-valve system and the outlet-valve system causes a pressure rise at the outlet-valve system, causing the outlet-valve system to open for flow of lubricant from the conduit to the nozzle aperture by which lubricant is injected into the cylinder through the nozzle aperture. At the end of the lubrication period, the electrical control signal from the controller is changed, causing the inlet-valve system to close again for lubricant supply from the lubricant inlet to the nozzle aperture. The pressure in the conduit decreases again, and the outlet-valve system closes.

Thus, there are two valve systems in the injector. The inlet-valve system is regulated by electrical signals from the controller, and the outlet-valve system is activated only by the elevated pressure of the lubricant at the outlet-valve system, once the inlet-valve system has opened and caused flow of lubricant at elevated pressure from the lubricant feed conduit to the outlet-valve system. There is no mechanical connection that couples the movable parts of the inlet-valve system with movable parts of the outlet-valve system. Coupling between the opening and closing of these two systems is done only by the lubricant that flows from the inlet-valve system to the outlet-valve system.

In practical embodiments, the inlet-valve system comprises a movable electrically driven inlet-valve member arranged for moving from an idle-phase position, in which the inlet-valve member in the idle-phase blocks the flow path, to an injection-phase position, in which the inlet-valve member opens the flow path for flow of lubricant through the flow path in the injection-phase. The inlet-valve member is pre-stressed towards an idle-phase position by an inlet-valve spring.

In some embodiments, for electrically driving the movable inlet-valve member, the inlet-valve system comprises a movable and electrically-driven rigid displacement-member that is arranged for displacing the inlet-valve member from an idle-phase position, in which the inlet-valve member blocks the flow path, to an injection-phase position, in which the inlet-valve member opens the flow path for flow of lubricant through the flow path for lubricant injection in an injection-phase.

Typically, the inlet valve member is moved against the pressure of the lubricant at the lubricant inlet in order to open the inlet-valve system.

For example, the inlet-valve system comprises an inlet non-return valve with an inlet-valve member, for example a ball, ellipsoid, plate, or cylinder, pre-stressed against an inlet-valve seat by an inlet-valve spring for an idle-state and arranged for throughput of lubricant from the lubricant inlet to the outlet-valve system for an injection-phase upon displacement of the inlet-valve member from the inlet-valve seat against force from the inlet-valve spring.

The electrically-driven rigid displacement-member is a push-member for pushing the inlet-valve member, for example from the inlet-valve seat, during lubricant injection.

For example, the inlet-valve system comprises a solenoid for driving the displacement member. In this case, the displacement-member is connected to an arrangement of a solenoid-plunger and solenoid coil for upon electrical excitation of the solenoid coil to drive the displacement-member. Optionally, the displacement-member is connected to the solenoid-plunger, whereas the solenoid coil is stationary in the injector. Alternatively, the displacement-member is connected to the solenoid coil, which is movable together with the displacement-member.

As alternative to a solenoid, piezo electric elements are part of the inlet valve system and used for driving the displacement-member.

After the injection-phase, the motion of the displacement-member is reversed and the inlet-valve member is caused to return to the inlet-valve seat. In some practical embodiments, the displacement member is a rigid rod.

In principle, the displacement-member can be fastened to the inlet-valve member, for pushing or pulling the inlet-valve member from the inlet-valve seat. However, this need not be so, and the displacement-member is a push-member that is not fastened to the inlet-valve member. Especially, in order to increase the opening speed of the inlet-valve system, the following embodiment has been found useful. In this case, the displacement-member is a push-member that is not fastened to the inlet-valve member. Further, while in an idle-state, the push member is provided at a distance from the inlet-valve member, for example between 0.1 and 2 mm, optionally between 0.2 and 1 mm. By the control signal from the controller, the push-member is accelerated towards the inlet-valve member, obtains speed prior to impact with the movable inlet-valve member, and pushes the inlet-valve member from its closing idle-phase position, for example the inlet-valve seat of a non-return valve, by the impact. Because the push-member is accelerated over a distance prior to impact with the inlet-valve member, the displacement of the inlet-valve member, for example ball from the inlet-valve seat, by the push is abrupt, and the results is a very short time it takes to open the inlet valve-system for start of flow of lubricant through the injector. The short time for opening the inlet-valve system implies a high degree of precision in timing.

In some embodiment, the distance from the inlet-valve member to the push-member in the idle-state is adjustable. For example, the travel distance for the push-member is adjustable by a movable end stop.

For the event that the push-member is fastened to a solenoid-plunger in a solenoid plunger/coil arrangement, an adjustable end stop is optionally provided for the solenoid-plunger.

In some embodiments, the push-member is a push-rod, optionally connected to the solenoid-plunger for displacement together with the solenoid-plunger upon excitation of the solenoid coil. For example, the push-rod has a first end for contact, for example impact, with the inlet-valve member for displacing the movable inlet-valve member by contact, for example impact, with the first end.

In practical embodiments, the lubricant inlet and the inlet-valve system are provided in an inlet-valve housing. Optionally, the outlet-valve system is provided in the nozzle and a flow chamber is provided in the form of a hollow rigid tube connecting the inlet-valve housing with the nozzle.

In order to mount the injector in the cylinder wall, the injector optionally comprises a flange provided around the flow chamber. For example, the flange is bolted against the inlet-valve housing, thereby clamping the flow chamber to the inlet-valve housing.

The system as described herein has a number of advantages,

Firstly, by providing separate inlet-valve system and outlet-valve system, the total mass of movable inlet-valve and outlet-valve members that has to be moved during operation of the inlet-valve and outlet-valve systems is reduced. The reduced mass reduces reaction time of the movable objects, why the system implies an increased reaction speed and corresponding precision with respect to timing and amount.

Secondly, the electrically controlled inlet-valve system with the push member, for example push-rod, implies a sudden impact on the inlet-valve member, for example ball, such that the onset of injection is very abrupt and, therefore, precisely timed.

Thirdly, the system does only a single lubricant line to the injectors 4, as there is no need for a return line, which minimizes costs and efforts for installation and minimizes the risk for faults. This is especially so because the engines are large and would require return lines of several meters length. Also, imprecision in time a volume when closing the valve due to dead volume in a potentially return pipe for the lubricant is avoided.

Fourthly, injectors with the outlet-valve systems are stable against high pressure from the cylinder.

In case that the outlet-valve system comprises a non-return valve in or at the nozzle, and the non-return valve comprises a valve member, for example ball, which is spring pressed against a valve seat, a high degree of robustness against failure has been observed. These systems are simple, and the risk for clogging is minimal. Also, the valve seats tend to be self-cleaning and subject to little uneven wear, especially for valve members being balls, why a high and long-term reliability is provided. Accordingly, the injector is simple and reliable, quick and precise, and easy to construct from standard components with low production costs.

The invention also has distinct advantages over systems in which an outlet-valve system is provided in the injector and a valve system for feeding the injector is provided remote from the injector, for example as disclosed in the above-mentioned EP1767751. As the injector as described above only has a short and rigid flow chamber from the inlet-valve system to the outlet-valve system, uncertainties and imprecisions of the injection amount and the timing are minimized in that minutes compression and expansion of the oil in the relatively long conduits are avoided as well as expansion of the conduits themselves.

The following embodiments are useful alternatives to non-return ball valves.

In these embodiments, the inlet-valve member is a reciprocal member that is provided inside a bushing of a stationary valve member. The stationary valve member comprises a transverse canal extending transversely through the bushing, where the transverse canal is closed by the reciprocal member in an idle-phase and only opened when a throughput section of the reciprocal member gets aligned with the transverse canal for the injection-phase. When the transverse canal is opened, the lubricant inlet of the injector communicates with a nozzle aperture of the injector, and lubricant is injected into the cylinder of the engine from the nozzle aperture.

The specific valve system is acting fast due to its light-weight components, especially the reciprocal member that is opening and closing for the lubricant flow. Furthermore, the components are relatively simple in construction and imply low production costs. In addition to these advantages, the valve system is reliable, robust, and has a low risk for clogging. As the components are subject to relatively small pressure load, the valve system also has a long lifetime.

This principle of a valve system where the throughput section of the reciprocal member gets aligned with the transverse canal of the bushing during injection is not only useful for the inlet-valve but can also be used for the outlet-valve as an alternative to non-return ball valves. Accordingly, in practical embodiments, the inlet-valve system or the outlet-valve system or both comprises such a valve system. Further detailed embodiments are explained in the following.

Optionally, such valve system comprises stationary valve member, which in turn comprises a cylindrical bushing inside which a cylindrical reciprocal member is provided with a cylinder axis equal to a cylinder axis of the bushing and reciprocally movable inside the bushing along the cylinder axis between a first position and a second position. The term cylindrical bushing is used for describing that the bushing has a cylindrical hollow, typically but not necessarily with a circular cross section. The cylindrical reciprocal member fits tightly into the cylindrical hollow of the bushing so that no lubricant can flow between the cylindrical reciprocal member and the cylindrical bushing apart from a potential minimal amount that is only lubricating the reciprocal member inside the bushing and which is negligible as compared to the amount of lubricant injected into the cylinder.

A transverse canal extends through the stationary valve member and through the bushing. The transverse canal has a first transverse canal section on one side of the bushing and a second transverse canal section on another side of the bushing. The reciprocal member comprises a transverse throughput section for flow of the lubricant through, along and/or around the reciprocal member in order for the lubricant to flow through the canal sections transversely to the cylinder axis. The throughput section of the reciprocal member is arranged for being remote from the transverse canal of the bushing in the first position for closing the transverse canal in the idle-phase. In the injection-phase, the throughput section of the reciprocal member is aligned with the transverse canal by moving the reciprocal member into a second position for flow from the first transverse canal section through the throughput section to the second transverse canal section. In some practical embodiments, the reciprocal member is pre-stressed towards the first position by a spring.

Optionally, the throughput section is provided as a narrowing section of the reciprocal member for flow of lubricant from the first transverse canal section in the bushing around the narrowing section of the reciprocal member into the second transverse canal section of the bushing when the reciprocal member is in the second position and its narrowing section is aligned with the two opposite canal sections of the bushing.

In order to provide tight sealing of the second transverse canal section, the following embodiment is useful, wherein the second transverse canal section at the bushing has a canal entrance opening with a diameter d, and the reciprocal member has a first diameter D which is larger than d. The reciprocal member is then pressed in a tightening manner against the canal entrance opening in the first transverse canal section by pressurized lubricant, or other pressurised liquid for the event that the valve system is used for other liquids than lubricant.

For example, in the stationary valve member, a first canal and a second canal are provided parallel to the cylinder axis and on different sides of the bushing. The first canal is connected to the bushing through the first transverse canal section, and the second canal is connected to the bushing through the second transverse canal section.

It is pointed out that the valve system has a general character such that it is not limited to lubricant injectors but can be used in other apparatus as well and, correspondingly, for other liquids. However, it is very advantageous for lubricant injectors.

In the case that the valve system is used as an inlet-valve system of the injector, the first position of the reciprocal member is an idle-phase position for the idle-phase and the second position of the reciprocal member is an injection position for the injection-phase. The first canal and the second canals, which are provided on different sides of the bushing are optionally provided in the stationary valve member, as described above, but can alternatively be provided in the surrounding housing, for example in a flow chamber that connects the base of the injector with the nozzle if the stationary valve member is provided at least partly inside such flow chamber. The first canal communicates with the lubricant inlet and the second canal communicates with the outlet-valve system. Accordingly, for the idle-phase, the throughput section of the reciprocal member is arranged for being remote from the transverse canal in the idle-phase position for closing the transverse canal and preventing flow of lubricant from the first transverse canal section to the second transverse canal section. For the injection-phase, the throughput section of the reciprocal member is arranged for being aligned with the transverse canal only in the injection position for flow of lubricant serially from the lubricant inlet through the first canal, then through the first transverse canal section, then through the throughput section, then through the second transverse canal section and then through the second canal and to the outlet-valve system in the injection-phase.

For example, the injectors comprise a nozzle with a nozzle aperture of between 0.1 and 1 mm, for example between 0.2 and 0.5mm, and are configured for ejecting a spray of atomized droplets, which is also called a mist of oil.

A spray of atomized droplets is important in SIP lubrication, where the sprays of lubricant are repeatedly injected by the injectors into the scavenging air inside the cylinder prior to the piston passing the injectors in its movement towards the TDC. In the scavenging air, the atomized droplets are diffused and distributed onto the cylinder wall, as they are transported in a direction towards the TDC due to a swirling motion of the scavenging air towards the TDC. The atomization of the spray is due to highly pressurized lubricant in the lubricant injector at the nozzle. The pressure is higher than 10 bars, typically between 25 bar and 100 bar for this high pressure injection. An example is an interval of between 30 and 80 bars, optionally between 35 and 60 bars. The injection time is short, typically in the order of 5-30 milliseconds (msec). However, the injection time can be adjusted to 1 msec or even less than 1 msec, for example down to 0.1 msec. Therefore imprecisions of only a few msec may alter the injection profile detrimentally, why high precision is required, as already mentioned above, for example a precision of 0.1 msec.

Also, the viscosity influences the atomization. Lubricants used in marine engines, typically, have a typical kinematic viscosity of about 220 cSt at 40°C and 20 cSt at 100°C, which translates into a dynamic viscosity of between 202 and 37 mPa·s. An example of a useful lubricant is the high performance, marine diesel engine cylinder oil ExxonMobil^{®} Mobilgard^{™} 560VS. Other lubricants useful for marine engines are other Mobilgard^{™} oils as well as Castrol^{®} Cyltech oils. Commonly used lubricants for marine engines have largely identical viscosity profiles in the range of 40-100°C and are all useful for atomization, for example when having a nozzle aperture diameter of 0.1-0.8 mm, and the lubricant has a pressure of 30-80 bars at the aperture and a temperature in the region of 30-100°C or 40-100°C. See also, the published article on this subject by Rathesan Ravendran, Peter Jensen, Jesper de Claville Christiansen, Benny Endelt, Erik Appel Jensen, (2017) "Rheological behaviour of lubrication oils used in two-stroke marine engines", Industrial Lubrication and Tribology, Vol. 69 Issue: 5, pp.750-753, https://doi.org/10.1108/ILT-03-2016-0075.

The term "a solenoid coil" should be understood as "at least one solenoid coil", as it is possible and in some cases advantageous to use more than one coil, for example two or three coils.

### SHORT DESCRIPTION OF THE DRAWINGS

The invention will be explained in more detail with reference to the drawing, where
- FIG. 1: is a sketch of part of a cylinder in an engine;
- FIG. 2: is a drawing of the injector with a) an overview sketch, b) an enlarged section of the inlet-valve housing;
- FIG. 3: illustrates an example of a nozzle;
- FIG. 4: illustrates an alternative example of a nozzle;
- FIG. 5: illustrates an alternative embodiment
- FIG. 6: is a drawing of an injector housing in a) an overview drawing and b) in an enlarged drawing;
- FIG. 7: is a drawing of a second embodiment of an outlet-valve system.

### DETAILED DESCRIPTION / PREFERRED EMBODIMENT

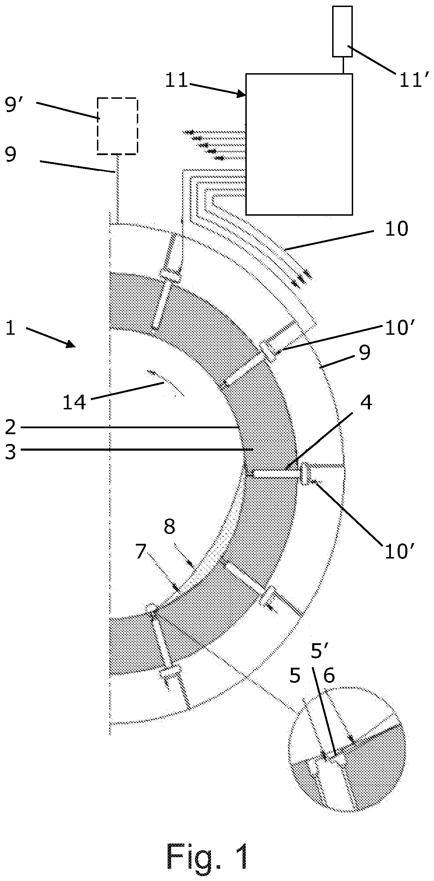

FIG. 1 illustrates one half of a cylinder 1 of a large slow-running two-stroke engine, for example marine diesel engine. The cylinder 1 comprises a cylinder liner 2 on the inner side of the cylinder wall 3. Inside the cylinder wall 3, there are provided a plurality of injectors 4 for injection of lubricant into the cylinder 1. As illustrated, the injectors 4 are distributed along a circle with the same angular distance between adjacent injectors 4, although this is not strictly necessary. Also, the arrangement along a circle is not necessary, seeing that an arrangement with axially shifted injectors is also possible, for example every second injector shifted towards the piston's top dead centre (TDC) relatively to a neighbouring injector.

Each of the injectors 4 has a nozzle 5 with a nozzle aperture 5' from which lubricant, for example as a fine atomized spray 8 with miniature droplets 7, is ejected under high pressure into the cylinder 1.

For example, the nozzle aperture 5' has a diameter of between 0.1 and 0.8 mm, such as between 0.2 and 0.5 mm, which at a pressure of 10-100 bars, for example 25 to 100 bars, optionally 30 to 80 bars or even 50 to 80 bars, atomizes the lubricant into a fine spray 8, which is in contrast to a compact jet of lubricant. The swirl 14 of the scavenging air in the cylinder 1 transports and presses the spray 8 against the cylinder liner 2 such that an even distribution of lubrication oil on the cylinder liner 2 is achieved. This lubrication system is known in the field as Swirl Injection Principle, SIP.

However, also other principles are envisaged in connection with the improved lubrication system, for example injectors that have jets directed towards the cylinder liner.

Optionally, the cylinder liner 2 is provided with free outs 6 for providing adequate space for the spray 8 or jet from the injector 4.

The injectors 4 receive lubrication oil through a feed conduit 9, typically through a common feed conduit 9, from a lubricant supply 9', for example oil circuit, of the engine including a potential lubricant pump that raises the pressure of the lubricant to an adequate level. For example, the pressure in the feed conduit 9 is in the range of 25 to 100 bars, optionally 30 to 80 bars, which is a typical range of pressure for SIP valves.

The injectors 4 are provided with electrical connectors 10' that are electrically communicating with a controller 11 through electrical cables 10. The controller 11 sends electrical control signals to the injectors 4 for controlling injection of lubricant by the injector 4 through the nozzle 5. As it is illustrated, one cable 10 is provided for each injector 4, which allows individual control of injection by the respective injector. However, it is also possible to provide one electrical cable 10 from the controller 11 to all injectors 4 such that all injectors 4 are injecting simultaneously upon receiving an electrical control signal through one single electrical cable. Alternatively, it is also possible to provide one electrical cable 10 from the controller 11 to a subgroup of injectors, for example a subgroup of 2, 3, 4, 5 or 6 injectors, such that a first subgroup is controlled by the controller through a first cable 10 and a second subgroup is controlled through a second cable 10. The number of cables and subgroups are selective dependent on preferred configurations.

The electrical control signals from the controller 11 to the injectors 4 are provided in precisely timed pulses, synchronised with the piston motion in the cylinder 1 of the engine. For example, for the synchronisation, the controller system 11 comprises a computer 11' or is electronically connected a computer 11', by wires or wireless, where the computer 11' monitors parameters for the actual state and motion of the engine, for example speed, load, and position of the crankshaft, where the latter reveals the position of the pistons in the cylinders.

The computer 11' and the controller system 11 are optionally combined. The controller 10 in cooperation with the computer 11' determines the time length of the injection-phase by the time that current is provided through the electrical cable or cables 10.

In the following, injectors are explained for use in a system of FIG. 1..

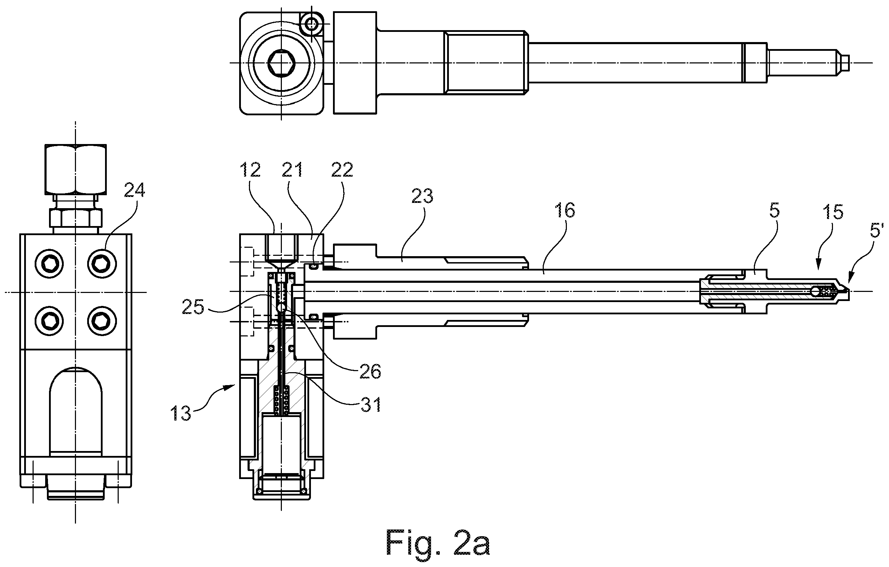

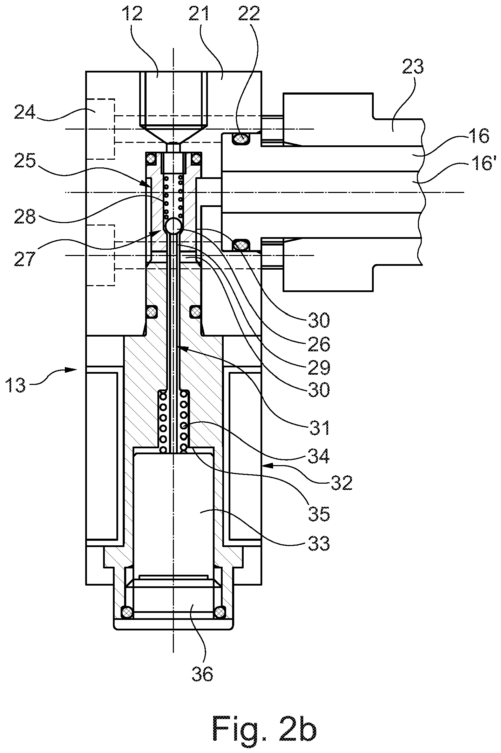

FIG. 2 illustrates principle sketches of an injector 4. FIG. 2a is an overview sketch with three different views of the exemplified injector, top view, end view and cross-sectional side view. FIG. 2b is an enlarged portion of the inlet-valve system. The injector 4 comprises a lubricant inlet 12 for receiving lubricant from the lubricant feed conduit 9. The lubricant inlet 12 is provided in an inlet-valve housing 21 comprising an inlet-valve system 13 communicating with the lubricant inlet 12 for regulating the amount of lubricant received from the lubricant feed conduit 9 during a lubrication phase. The injector 4 also comprising an outlet-valve system 15 for regulating the lubricant that is dispensed through the nozzle aperture 5'. A rigid flow chamber 16 connects the inlet-valve system 13 with the outlet-valve system 15 for flow of lubricant to the nozzle 5. In the shown embodiment, the flow chamber 16 is provided as a hollow rigid rod. The flow chamber 16 is sealed against the inlet-valve housing 21 of the inlet-valve system 13 by an O-ring 22 and held tightly against the inlet-valve housing 21 by a flange 23 that is bolted by bolts 24 against the inlet-valve housing 21.

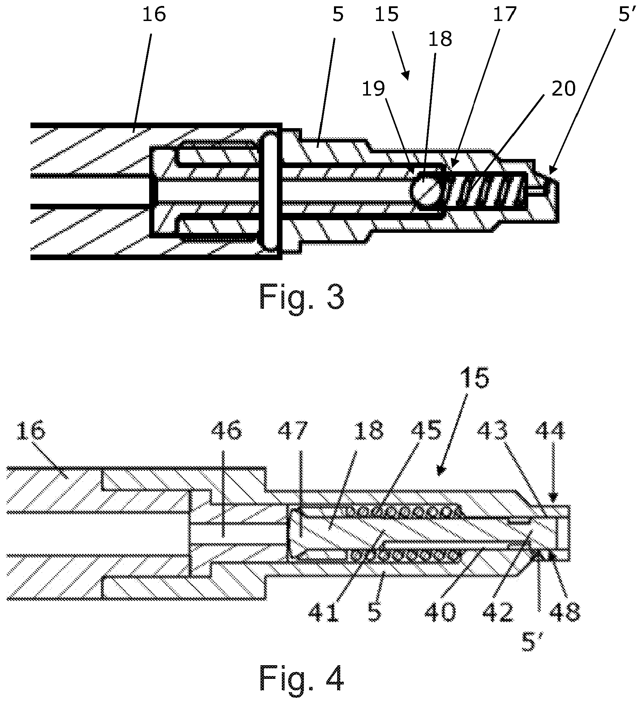

An example of an outlet-valve system 15 is shown in greater detail in FIG. 3, the outlet-valve system 15 comprises an outlet non-return outlet-valve 17. In the outlet non-return outlet-valve 17, an outlet-valve member 18, exemplified as a ball, is pre-stressed against an outlet-valve seat 19 by an outlet-valve spring 20. Upon provision of pressurised lubricant in the flow chamber 16, the pre-stressed forced of the outlet-valve spring 20 is counteracted by the lubricant pressure, and when the pressure gets higher than the spring force, the outlet-valve member 18 is displaced from its outlet-valve seat 19, and the outlet non-return outlet-valve 17 opens for injection of lubricant through the nozzle aperture 5' into the cylinder 1. As exemplified, the outlet-valve spring 20 acts on the outlet-valve member 18 in a direction away from the nozzle aperture 5'. The closing of the non-return outlet-valve 17 in an idle-state prevents unintended flow of lubricant from the flow chamber 16 through the nozzle aperture 5' into the cylinder 1 between injection-phases.

FIG. 2b illustrates the inlet-valve system 13 in greater detail. Inside the inlet-valve housing 21, a non-return inlet-valve 25 is provided with an inlet-valve member 26 that is pre-stressed against an inlet-valve seat 27 by an inlet-valve spring 28. The inlet-valve member 26 is exemplified as a ball, however, a different shape, for example oval, conical, plane, or cylindrical, would also work. When the inlet-valve member 26 is displaced from the inlet-valve seat 27 against the force of the inlet-valve spring 28 and against the lubricant pressure at the lubricant inlet 12 from the lubricant feed conduit 9, lubricant flows from the lubricant inlet 12 along the inlet-valve spring 28, passes the inlet-valve member 26 and the inlet-valve seat 27, and enters a channel 29 on an opposite side of the inlet-valve member 26. From the channel 29, the lubricant flows through passage 30 and enters the hollow part 16' of the flow chamber 16, for flow to the outlet-valve system 17, which is shown on FIG. 3.

In order to displace the inlet-valve member 26 (ball), a push-member 31, exemplified as a push-rod, is provided reciprocal in the channel 29. The push-member 31 is not fastened to the inlet-valve member 26 but is fastened to a reciprocal solenoid-plunger 33 that is driven by a solenoid coil 32. The solenoid-plunger 33 is retracted by a plunger spring 34 when in idle-phase condition. When the solenoid coil 32 is excited by electrical current, the solenoid-plunger 33 is moved forward against the force of the plunger spring 34 until it comes to a halt against a plunger stop 35. Due to the movement of the solenoid-plunger 33, the push-member (push-rod) 31 pushes the inlet-valve member (ball) 26 away from the inlet-valve seat 27, allowing lubricant to flow through the inlet non-return valve 25 and into the flow chamber 16.

In advantageous embodiments, the push-member (push-rod) 31 is withdrawn a distance from the inlet-valve member (ball) 26 when in idle-state, such that there is a free range distance in between the push-member 31 and the inlet-valve member 26. When the solenoid coil 32 is excited, the push-member 31 is accelerated by the solenoid coil 32 over the free range distance before it impacts the inlet-valve member 26 after initial acceleration. This results in the inlet-valve member 26 being displaced abruptly from the inlet-valve seat 27, as compared to a situation where the inlet-valve member 26 moves together with push-member 31 during the first part of the acceleration. The quick displacement of the inlet-valve member 26, in turn, is advantageous for a precise timing of the start of the lubricant injection into the cylinder 1. Optionally, the free range distance is adjustable by an adjustment screw 36 at the end of the solenoid-plunger 33

After the injection-phase, the lubricant supply from the inlet 12 to the nozzle 5 is stopped by cutting the current to the solenoid coil 32, which results in the solenoid-plunger 33 being pushed back by the plunger spring 34, and the inlet-valve member 26 returns to the tight inlet-valve seat 27 for an idle-phase in the injection cycle.

FIG. 4 illustrates a second, alternative embodiment of an outlet-valve system 15. The generalised principle of the outlet-valve system 15 is similar to the one disclosed in WO2014/048438. This reference also provides additional technical details as well as explanations to the functioning of the injector 4 presented here, which are not repeated here, for convenience. A nozzle aperture 5' is provided in the nozzle 5 tip for ejection of lubrication oil. Inside a cavity 40 of the nozzle 5, an outlet-valve member 18 is provided, the outlet-valve member 18 comprising a stem 41 and a cylindrical sealing head 42 which is arranged slidingly in a cylindrical cavity part 43 at the nozzle tip 44. The position of the valve member 18 is pre-stressed backwards away from the nozzle tip 44 by a spring 45 and is offset forwards by oil pressure acting through a channel 46 upon the back part 47 of the stem 41, the oil pressure acting against the spring force. The nozzle aperture 5' is sealingly covered by the sealing head 42 which abuts the cylindrical cavity part 43 at the nozzle tip 44, unless the valve member 18 is pushed forward such that the sealing head 43 slides pass and away from the nozzle aperture 5' to allow lubricant oil to flow from the inner cavity 46 through the nozzle aperture 5' for ejection.

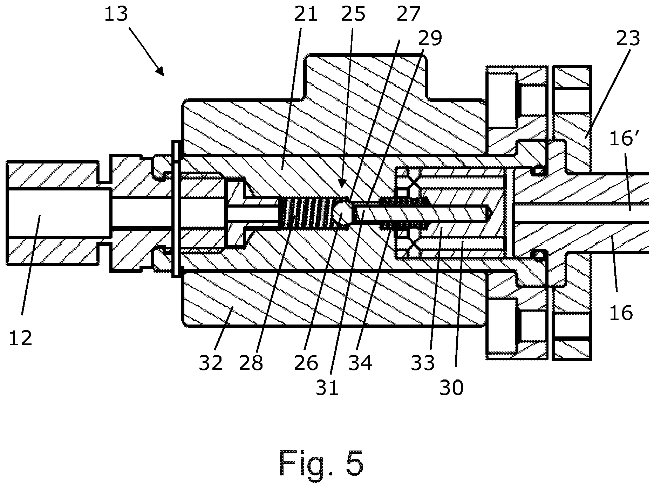

FIG. 5 illustrates an alternative inlet-valve system 13, where the push-member 31 and the solenoid-plunger 33 are combined. The direction of movement of the push member 31 and the solenoid-plunger 33 in the solenoid coil 32 is parallel to the flow chamber 16. As compared to the embodiment in FIG. 2b, the direction of the movement of the push member 31 is rotated 90 degrees. This results in an even more compact configuration than in FIG. 2b, despite an analogous principle for the functioning. Accordingly, the explanation given in connection with FIG. 2b applies equally well in the inlet-valve system 13 of FIG. 4 with respect to the motion of the push-member 31 and the inlet-valve member and the flow of the lubricant from the inlet 12 to and along the push member 31 in the channel 29 and through the passage 30 to the hollow part 16' of the flow chamber 16, the flow path of the lubricant being through the hollow part 16'.

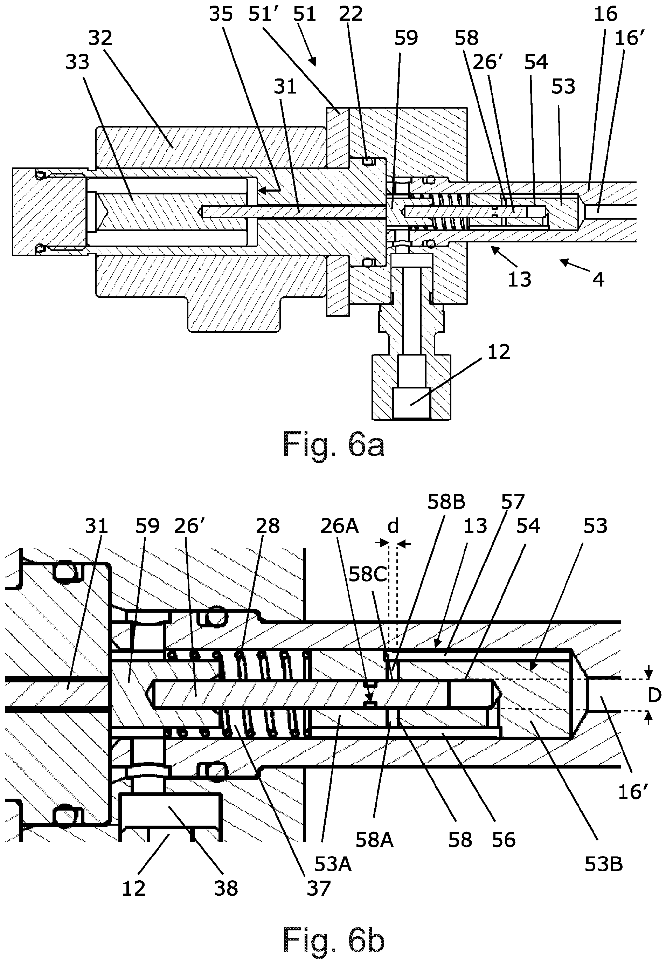

FIG. 6a illustrates an injector housing 51 of an injector 4. The injector housing 51 is to be connected to a nozzle 5, for example of the type as in FIG. 3a, FIG. 3b or of the type as in FIG. 4. The housing 51 comprises a base 60 and a tubular flow chamber 16, which is a rigid hollow rod that rigidly connects the base 60 with the nozzle 5. The flow chamber 16 is sealed against the base 60 by an O-ring 22.

The base 60 comprises a lubricant inlet 12 for receiving lubricant from the lubricant feed conduit 9. The lubricant inlet 12 is communicating with an inlet-valve system 13 for regulating the amount of lubricant received from the lubricant feed conduit 9 and delivered to the nozzle 5 through the hollow part 16' of the flow chamber 16 during an injection-phase.

For regulating the lubricant that is dispensed through the nozzle aperture 5' the injector 4 also comprising an outlet-valve system 15.

In FIG. 6b, the inlet-valve system 13 of FIG. 6a is shown enlarged. It comprises a stationary valve member 53 that comprises a longitudinal bushing 54 in which a reciprocal member 26' is slidingly arranged. The reciprocal member 26' is tightly fitting inside the bushing 54 such that lubricant is not flowing between the outer side of the reciprocal member 26' and the inner side of the bushing 54, at least not to an extent that would influence the lubrication injection but potentially sufficient for lubricating the reciprocal member 26' inside the bushing 54. The reciprocal member 26' comprises a throughput section, exemplified as a narrowing section 26A, the function of which will be explained below. It is pointed out that the throughput section could also be a channel provided transversely in the reciprocal member 26'.

The stationary valve member 53 has a stationary rear part 53A and a stationary front part 53B, which in the exemplified embodiment are provided combined as a single piece. A first canal 56 is provided on one side of the valve member 53 and extending in a longitudinal direction of the flow chamber 16 along the valve member 53, and a second canal 57 is provided on the opposite side of the valve member 53 and extending in a longitudinal direction of the flow chamber 16 along the valve member 53. The longitudinal direction is identical to the cylinder axis of the reciprocal member 26' and the bushing 54. A transverse canal 58 is provided in the valve member 53 for connecting the first canal 56 with the second canal 57. However, a connection between the first canal 56 and the second canal 57 is only made when the reciprocal member 26' is moved forward towards the nozzle 5 so that the throughput section, exemplified as a narrowing section 26A, is flush with the transverse canal 58.

The reciprocation of the reciprocal member 25 is provided by a displacement-member 31, exemplified as a push-rod, which is fastened to a reciprocal plunger 33 that is driven by a solenoid coil 32. The displacement-member 31 acts on a head 59 that is reversely spring loaded by helical inlet-valve spring 28. The head 59 is fastened to the reciprocal member 26' and moves together with it. The plunger 33, head 59, and the reciprocal member 26' are retracted by the inlet-valve spring 28 when in idle-phase condition. When the solenoid coil 32 is excited by electrical current, the plunger 33 is moved forward towards the nozzle, which in turn results in moving the head 59 and the reciprocal member 26' forward against the force of the inlet-valve spring 28 until the plunger 33 comes to a halt against a stop 35. At the most forward position of the reciprocal member 26, the narrowing section 26A of the reciprocal member 26' is flush with the transverse canal 56.

When the lubricant inlet 12 receives lubricant from the feed conduit 9, the lubricant flows through the lubricant inlet 12 and through a rear passage 37 into a rear chamber 37 in which also the inlet valve spring 28 is located. From the rear chamber 37, the oil flows into the first canal 56 and into the front part of the bushing 54. The lubricant also flows from the first canal 56 into the first transverse canal section 58A of the transverse canal 58, but not through the transverse canal 58 and to the second canal 57 due to the blocking of the transverse canal 58 by the reciprocal member 26'.

Due to the lubricant pressure, the reciprocal member 26' is pressed against the entrance opening 58C of the second transverse canal section 58B. As illustrated, a tight sealing is achieved, if the reciprocal member 26' is cylindrical with a diameter D that is larger than the diameter d of the second transverse canal section 58B.

When the solenoid coil 32 is excited by electrical current, the reciprocal member 26' is pushed forward, until the narrowing section 26A of the reciprocal member 26' is flush with the transverse canal 58, and lubricant can flow from the first canal 56 into the first transverse canal section 58A of the transverse canal 58, and from the first transverse canal section 58A through the narrowing section 26A into the second transverse canal section 58B and further into the second canal 57 at the opposite end of the transverse canal 58. The second canal 57 is communicating with the hollow part 16' so that the lubricant can flow to the nozzle 5 from the second canal 57. As the lubricant is sufficiently pressurised, the lubricant will open the outlet-valve 56 and be ejected from the nozzle aperture 5' into the cylinder 1 of the engine.

When the solenoid 32 is de-excited again at the end of the injection-phase, the inlet valve spring 28 presses the head 59 and the plunger 33 as well as the reciprocal member 26' again back from the forward injection position to the idle-phase rearward position.

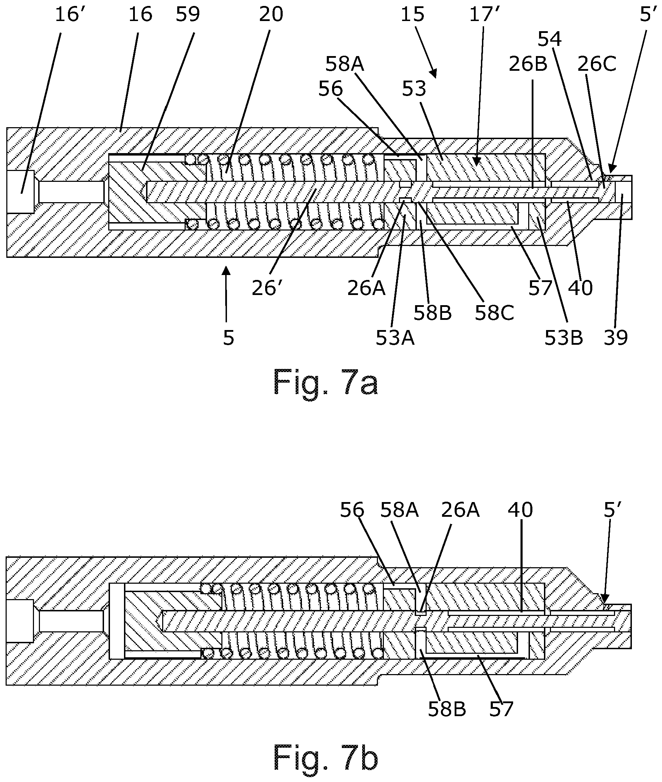

FIG. 7a illustrates an outlet-valve system 15 in a closed state and FIG. 4b in an open state. The outlet-valve system 15 is provided with an alternative non-return outlet-valve 17', which is constructed similarly to the principle of the inlet-valve system 13. Also, in this case, the outlet-valve system 15 is provided in the nozzle 5. However, this is not strictly necessary, as it can also be provided upstream of the nozzle 5.

Similarly to the inlet-valve system 13, the alternative outlet-valve system 15 comprises a stationary valve member 53 with a rear part 53A and a front part 53B, which in the exemplified embodiment are provided as a single piece. It comprises a longitudinal bushing 54 in which a reciprocal member 26' is slidingly arranged. The reciprocal member 26' is tightly fitting inside the bushing 54 such that lubricant is not flowing between the outer side of the reciprocal member 26' and the inner side of the bushing 54, at least not more than to a negligible degree so that influence thereof on the lubricant injection is avoided. The reciprocal member 26' comprises a narrowing section 26A, similarly to the function as explained in relation to FIG. 6b.

A first longitudinal canal 56 is provided longitudinally on one side of the valve member 53 and a second canal 57 is provided longitudinally on the opposite side of the valve member 53. A transverse canal 58 is provided in the valve member 53 for connecting the first canal 56 and the second canal 57, however, a connection between the first canal 56 and the second canal 57 is only made when the reciprocal member 26' is moved forward towards the nozzle aperture 5' such that the narrowing section 26A is flush with the first transverse canal section 58A and second transverse canal section 58B of transverse canal 58, which is illustrated in FIG. 4b. In this situation, lubricant can flow from the first canal 56 into the first transverse canal section 58A of the transverse canal 58, and from the first transverse canal section 58A around narrowing section 26A and into the second transverse canal section 58B and further into the second canal 57 on the opposite end of the transverse canal 58.

The second canal 57 is communicating with a front chamber 40 that is provided around a further narrowing section 26B of the reciprocal member 26'. A front part 26C of the reciprocal member 26' tightens the front chamber 40 against the pressure of the cylinder of the engine. It is pointed out that the front part 26C is arranged for sliding forward in open channel 39, which in turn communicates with the cylinder 1 of the engine. The front part 26C also tightly covers the nozzle aperture 5'. The tightening principle of the cylindrical front part 26C is similar to the prior art principle as disclosed in WO2014/048438.

A forward motion of the reciprocal member 26' towards the nozzle aperture 5' is effected by sufficiently pressurised lubricant from the hollow part 16' acting on the head 59 against the power of the outlet valve spring 20 and the against the pressure from the cylinder of the engine, which acts in the opposite direction on the end part 26C of the reciprocal member 26' in open channel 39. When the head 59 is pushed forward, lubricant flows around the head 59 into the first canal 56 and from the from the first canal 56 into the first transverse canal section 58A of the transverse canal 58, and from the first transverse canal section 58A through the narrowing section 26A into the second transverse canal section 58B and further into the second canal 57 on the opposite end of the transverse canal 58. From the second canal 57, the lubricant flows into front chamber 40. When the reciprocal member 26' is pushed sufficiently forward so that the end part 26C in the open channel 39 is pushed pass the nozzle aperture 5', lubricant flows from front chamber 40 out of nozzle aperture 5'.

As long as the pressure of the lubricant is high enough for holding the reciprocal member 53 in the forward position, lubricant will flow through the hollow part 16'and out of nozzle aperture 5'. After the injection-phase, the lubricant supply from the lubricant inlet 12 to the nozzle 5 is stopped by cutting the current to the solenoid coil 32, which results in the head 59 and the displacement-member 26' as well as the plunger 33 being pushed back by the spring 34 for an idle-phase in the injection cycle.

In principle, the valve in FIG. 6 can also be used as a hydraulic driven inlet-valve.

### Numbering

1 cylinder
2 cylinder liner
3 cylinder wall
4 lubricant injector
4A inlet of lubricant injector 4
4B pressure control port of lubricant injector 4
5 nozzle
5' nozzle aperture
6 free cut in liner
7 atomised spray from a single injector 4
8 swirling spray
9 lubricant feed conduit
9' lubricant supply
10 electrical signal cable
10' electrical connection between electrical signal cable 10 and solenoid in injector 4
11 controller
11' computer
12 lubricant inlet of injector 4
13 inlet-valve system of injector 4
14 swirl in cylinder
15 outlet-valve system of injector 4
16 flow chamber connecting inlet-valve system 13 with outlet-valve system 15
16' hollow part of flow chamber 16
17 outlet non-return valve, exemplified as outlet ball valve
18 outlet-valve member
19 outlet-valve seat
20 outlet-valve spring
21 inlet-valve housing of inlet-valve system 15
22 O-ring at end of flow chamber 16
23 flange for holding flow chamber
24 bolts for holding flange 23 and flow chamber 16 against inlet-valve housing 21
25 inlet non-return valve
26 inlet-valve member, exemplified as ball
26' inlet-valve member, exemplified as electrically-driven cylindrical reciprocal valve member
26A throughput section, exemplified as narrowing section of the reciprocal valve member
26B further narrowing section of the reciprocal member 25 (in alternative outlet-valve system)
26C end part of the reciprocal member 26'
27 inlet-valve seat
28 inlet-valve spring
29 channel in inlet-valve system
30 passage from channel 29 to hollow part 16' of flow chamber 16
31 displacement member, in the embodiment illustrated as a push-member fastened to solenoid-plunger 33, the push-member is exemplified as a rod
32 solenoid coil
33 solenoid-plunger in solenoid coil 31
34 plunger spring
35 plunger stop
36 adjustment screw for adjustment of the free range distance
37 rear chamber of inlet-valve system 13
38 rear passage between inlet 12 and rear chamber 37
39 open channel
40 cavity
41 stem
42 cylindrical sealing head
43 cylindrical cavity part
44 nozzle tip
45 spring
46 channel
47 back part of the stem 41
51 injector valve housing
51' base of injector housing 51
53 stationary valve member
53A rear part of the valve member 53
53B front part of the valve member 53
54 bushing around reciprocal member 26'56 first canal extending in a longitudinal direction of the flow chamber 16
57 second canal extending in a longitudinal direction of the flow chamber 16
58 transverse canal
58A first transverse canal section of the transverse canal 58
58B second transverse canal section of the transverse canal 58
58C entrance of second transverse canal section 58B
59 head of reciprocal member 26' (in alternative outlet-valve system)

## Claims

1. A lubricant injector for a large slow-running two-stroke engine, wherein the injector (4) comprises
- a lubricant inlet (12) for receiving lubricant from a lubricant feed conduit (9);
- a nozzle (5) with a nozzle aperture (5') for injecting the lubricant from the lubricant inlet (12) into a cylinder (1) of an engine in an injection-phase;
- an outlet-valve system (15) at the nozzle (5) for opening and closing for flow of the lubricant to the nozzle aperture (5') during an injection cycle; the outlet-valve system (15) being configured for opening for flow of the lubricant to the nozzle aperture (5') during an injection-phase upon pressure rise above a predetermined limit at the outlet-valve system (15) and for closing the outlet-valve system (15) after the injection-phase;
- a lubricant flow path from the lubricant inlet (12) to the outlet-valve system (15) for flow of the lubricant from the lubricant inlet (12) and to the nozzle (5), through the outlet-valve system (15) and out of the injector (4) at the nozzle aperture (5'); and
- an electrically-driven inlet-valve system (13) in addition to the outlet-valve system (15),
wherein the inlet-valve system is arranged in the lubricant flow path between the lubricant inlet (12) and the outlet-valve system (15) for regulating the lubricant that is dispensed through the nozzle aperture (5') by opening or closing for lubricant flow from the lubricant inlet (12) to the outlet-valve system (15) in dependence of an electrical control-signal received from a controller (11);
wherein the inlet-valve system (13) is arranged upstream of the nozzle (5) and spaced from the nozzle (5) and upstream of the outlet-valve system (15) and spaced from the outlet-valve system (15), **characterized in that** the inlet-valve system (13) is arranged for SIP lubricant injections into the cylinder at a lubricant pressure in the range of 25 bar to 100 bar, that the inlet-valve system (13) comprises a movable electrically driven inlet-valve member (26, 26') arranged for moving from an idle-phase position, in which the inlet-valve member (26, 26') in the idle-phase blocks the flow path, to an injection-phase position, in which the inlet-valve member (26, 26') opens the flow path for flow of lubricant through the flow path in the injection-phase and that the inlet-valve member (26, 26') is pre-stressed into an idle-phase position by an inlet-valve spring (28), wherein the inlet-valve system (13) comprises an electrically-driven rigid displacement member (31) for displacing the inlet-valve member (26, 26') from the idle-phase position to the injection-phase position against the force of the inlet-valve spring (28), wherein the displacement-member (31) is a push-member arranged for pushing the inlet-valve member (26) away from it idle-phase position against the force from the inlet-valve spring (28) to its injection-phase position for lubricant injection in the injection-phase, wherein the displacement-member (31) is not fastened to the inlet-valve member (26); wherein the displacement-member (31) in the idle-state is provided at a distance from the inlet-valve member (26) and arranged for acceleration towards the inlet-valve member (26) for obtaining speed prior to impact onto the inlet-valve member (26) for displacing the inlet-valve member (26) from the inlet-valve seat (27) by the impact.

2. The injector according to claim 1, wherein the inlet-valve system (13) comprises an inlet non-return valve (25) that comprises an inlet-valve seat (27) against which the inlet-valve member (26) is pre-stressed by the inlet-valve spring (28) in the idle-phase for blocking the flow path by the inlet-valve member (26), and wherein the non-return-valve (25) is arranged for throughput of lubricant from the lubricant inlet (12) to the outlet-valve system (15) in the injection-phase upon displacement of the inlet-valve member (26) from the inlet-valve seat (27) against force from the inlet-valve spring (28) by the electrically-driven rigid displacement-member (31) during lubricant injection.

3. The injector according claim 1 or 2, wherein the inlet-valve member (26) is a reciprocal member (26'); wherein the inlet-valve system (13) comprises a stationary valve member (53), the stationary valve member (53) comprising a cylindrical bushing (54) inside which the electrically-driven cylindrical reciprocal member (26') is provided with a cylinder axis equal to a cylinder axis of the bushing (54); wherein the reciprocal member (26') is reciprocally movable inside the bushing (54) along the cylinder axis between an idle-phase position for the idle-phase and an injection position for the injection-phase;
wherein a first canal (56) is provided on one side of the bushing (54) and a second canal (57) is provided on another side of the bushing (54), wherein the first canal (56) communicates with the lubricant inlet (12) and the second canal (57) communicates with the outlet-valve system (15);
wherein a transverse canal (58) extends through the stationary valve member (53) and through the bushing (54), for connecting the first canal (56) with the second canal (57) through the bushing (54); the transverse canal (58) having a first transverse canal section (58A) connecting the first canal (56) with the bushing (54) and a second transverse canal section (58B) connecting the bushing (54) with the second canal (57);
wherein the reciprocal member (26') comprises a transverse throughput section (26A) for flow of lubricant through or around the reciprocal member (26') transversely to the cylinder axis; wherein the throughput section (26A) of the reciprocal member (26') is arranged for being remote from the transverse canal (58) in the idle-phase position for closing the transverse canal (58) and preventing flow of lubricant from the first transverse canal section (58A) to the second transverse canal section (58B); and wherein the throughput section (26A) of the reciprocal member (26') is arranged for being aligned with the transverse canal (58) only in the injection-phase position for flow of lubricant serially from the lubricant inlet (12) through the first canal (56) through the first transverse canal section (58A) through the throughput section (26A) through the second transverse canal section (58B) through the second canal (57) and to the outlet-valve system (15) in the injection-phase.

4. A large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter; the engine further comprising a controller (11) for controlling the amount and timing of the lubricant injection by at least one of the injectors (4); **characterized in that** each injector (4) is an injector according to any of claims 1-3.

5. The engine according to claim 4, wherein the inlet-valve system (13) comprises an inlet non-return valve (25) that comprises an inlet-valve seat (27) and the inlet-valve member (26), wherein the inlet-valve member (26) is pre-stressed against an inlet-valve seat (27) by the inlet-valve spring (28) in the idle-phase for blocking the flow path by the inlet-valve member (26), and wherein the non-return-valve (25) is arranged for throughput of lubricant from the lubricant inlet (12) to the outlet-valve system (15) in the injection-phase upon displacement of the inlet-valve member (26) from the inlet-valve seat (27) against force from the inlet-valve spring (28) by the electrically-driven rigid displacement-member (31) during lubricant injection.

6. The engine according to claim 4, wherein the inlet-valve member (26) is a reciprocal member (26'); wherein the inlet-valve system (13) comprises a stationary valve member (53), the valve member (53) comprising a cylindrical bushing (54) inside which the electrically-driven cylindrical reciprocal member (26') is provided with a cylinder axis equal to a cylinder axis of the bushing (54); wherein the reciprocal member (26') is reciprocally movable inside the bushing (54) along the cylinder axis between an idle-phase position for the idle-phase and an injection position for the injection-phase;
wherein a first canal (56) is provided on one side of the bushing (54) and a second canal (57) is provided on another side of the bushing (54), wherein the first canal (56) communicates with the lubricant inlet (12) and the second canal (57) communicates with the outlet-valve system (15);
wherein a transverse canal (58) extends through the stationary valve member (53) and through the bushing (54), for connecting the first canal (56) with the second canal (57) through the bushing (54); the transverse canal (58) having a first transverse canal section (58A) connecting the first canal (56) with the bushing (54) and a second transverse canal section (58B) connecting the bushing (54) with the second canal (57);
wherein the reciprocal member (26') comprises a transverse throughput section (26A) for flow of lubricant through or around the reciprocal member (26') transversely to the cylinder axis; wherein the throughput section (26A) of the reciprocal member (26') is arranged for being remote from the transverse canal (58) in the idle-phase position for closing the transverse canal (58) and preventing flow of lubricant from the first transverse canal section (58A) to the second transverse canal section (58B); and wherein the throughput section (26A) of the reciprocal member (26') is arranged for being aligned with the transverse canal (58) only in the injection position for flow of lubricant serially from the lubricant inlet (12) through the first canal (56) through the first transverse canal section (58A) through the throughput section (26A) through the second transverse canal section (58B) through the second canal (57) and to the outlet-valve system (15) in the injection-phase.

7. A method for lubricating a large slow-running two-stroke engine comprising a cylinder (1) with a reciprocal piston inside and with a plurality of injectors (4) distributed along a perimeter of the cylinder (1) for injection of lubricant into the cylinder (1) at various positions on the perimeter in an injection-phase; the engine further comprising a controller (11) for controlling the amount and timing of the lubricant injection by at least one of the injectors (4);
wherein each injector (4) comprises
- a lubricant inlet (12) for receiving lubricant from a lubricant feed conduit (9);
- a nozzle (5) with a nozzle aperture (5') extending into the cylinder (1) for injecting the lubricant from the lubricant inlet (12) into a cylinder (1) in the injection-phase;
- an outlet-valve system (15) at the nozzle (5) for opening and closing for flow of the lubricant to the nozzle aperture (5') during an injection cycle; the outlet-valve system (15) being configured for opening for flow of the lubricant to the nozzle aperture (5') during an injection-phase upon pressure rise above a predetermined limit at the outlet-valve system (15) and for closing the outlet-valve system (15) after the injection-phase;
- a lubricant flow path from the lubricant inlet (12) to the outlet-valve system (15) for flow of the lubricant from the lubricant inlet (12) and to the nozzle (5), through the outlet-valve system (15) and out of the injector (4) at the nozzle aperture (5').
wherein each injector (4) comprises an electrically-driven inlet-valve system (13) in addition to the outlet-valve system (15), wherein the inlet-valve system is electrically connected to the controller (11) and arranged in the lubricant flow path between the lubricant inlet (12) and outlet-valve system (15) for regulating the lubricant that is dispensed through the nozzle aperture (5') by opening or closing for lubricant flow from the lubricant inlet (12) to the outlet-valve system (15) in dependence of an electrical control-signal received from the controller (11); wherein the inlet-valve system (13) is arranged upstream of the nozzle (5) and spaced from the nozzle (5) and upstream of the outlet-valve system (15) and spaced from the outlet-valve system (15);
the method comprising sending an electrical control signal from the controller (11) to the electrically-driven inlet-valve system (13) for starting an injection-phase, and as a consequence thereof causing flow of lubricant from the lubricant feed conduit (9) through the lubricant inlet (12), through the inlet-valve system (13), and into a conduit (16') that flow-connects the inlet-valve system (13) with the outlet-valve system (15), by the lubricant flow into the conduit (16') increasing pressure in the conduit (16') and at the outlet-valve system (15), by the pressure rise causing the outlet-valve system (15) to open for flow of lubricant from the conduit (16') to the nozzle aperture (5') and injecting lubricant into the cylinder (1) through the nozzle aperture (5'); at the end of the injection-phase, changing the electrical control signal from the controller (11) to the inlet-valve system (13) and causing the inlet-valve system (13) to close for lubricant supply from the lubricant inlet (12) to the conduit (16') **characterized in that** the inlet-valve system (13) is arranged for SIP lubricant injections into the cylinder at a lubricant pressure in the range of 25 bar to 100 bar, that the inlet-valve system (13) comprises a movable and electrically-driven rigid inlet-valve member (26, 26') arranged for moving from an idle-phase position, in which the inlet-valve member (26) in the idle-phase blocks the flow path, to an injection-phase position, in which the inlet-valve member (26) opens the flow path for flow of lubricant through the flow path in the injection-phase; the method comprising receiving a control signal from the controller by the inlet-valve system and as a consequence of the receipt of the control signal displacing the inlet-valve member (26) from the idle-phase position to the injection-phase position for the injection-phase and causing flow of lubricant from the lubricant feed conduit (9) through the lubricant inlet (12) to the nozzle (5) injection-phase and after the injection-phase retracting the displacement-member (31) for causing the inlet-valve member to return to the idle-phase position and closing the lubricant supply from the lubricant inlet (12) to the conduit (16') injection-phaseand that the inlet-valve member (26, 26') is pre-stressed into an idle-phase position by an inlet-valve spring (28), wherein the inlet-valve system (13) further comprises an electrically-driven rigid displacement member (31) for displacing the inlet-valve member (26, 26') from the idle-phase position to the injection-phase position against the force of the spring (28), wherein the displacement-member (31) is a push-member and the method comprises pushing the inlet-valve member (26) away from the idle-phase position by the displacement-member (31) against the force from the inlet-valve spring (28) during lubricant injection, wherein the displacement-member (31) is not fastened to the inlet-valve member (26); wherein the displacement-member (31) in the idle-state is provided at a distance from the inlet-valve member (26); and wherein the method comprises by the control signal causing acceleration of the displacement-member (31) towards the inlet-valve member (26), obtaining speed prior to impact with the inlet-valve member (26), and displacing the inlet-valve member (26) from the idle-phase position by the impact, maintaining the inlet-valve member displaced from the idle-phase position for a predetermined period of time, and subsequently reversing the motion of the displacement-member (31) and causing the inlet-valve member (26) to return to the idle-phase position.

8. The method according to claim 7, wherein the inlet-valve member (26) is a reciprocal member (26'); wherein the inlet-valve system (13) comprises a stationary valve member (53), the valve member (53) comprising a cylindrical bushing (54) inside which the electrically-driven cylindrical reciprocal member (26') is provided with a cylinder axis equal to a cylinder axis of the bushing (54); wherein the reciprocal member (26') is reciprocally movable inside the bushing (54) along the cylinder axis between an idle-phase position for the idle-phase and an injection position for the injection-phase;
wherein a first canal (56) is provided on one side of the bushing (54) and a second canal (57) is provided on another side of the bushing (54), wherein the first canal (56) communicates with the lubricant inlet (12) and the second canal (57) communicates with the outlet-valve system (15);
wherein a transverse canal (58) extends through the stationary valve member (53) and through the bushing (54), for connecting the first canal (56) with the second canal (57) through the bushing (54); the transverse canal (58) having a first transverse canal section (58A) connecting the first canal (56) with the bushing (54) and a second transverse canal section (58B) connecting the bushing (54) with the second canal (57);
wherein the reciprocal member (26') comprises a transverse throughput section (26A) for flow of lubricant through or around the reciprocal member (26') transversely to the cylinder axis; wherein the throughput section (26A) of the reciprocal member (26') is arranged for being remote from the transverse canal (58) in the idle-phase position for closing the transverse canal (58) and preventing flow of lubricant from the first transverse canal section (58A) to the second transverse canal section (58B); and wherein the throughput section (26A) of the reciprocal member (26') is arranged for being aligned with the transverse canal (58) only in the injection position for flow of lubricant serially from the lubricant inlet (12) through the first canal (56) through the first transverse canal section (58A) through the throughput section (26A) through the second transverse canal section (58B) through the second canal (57) and to the outlet-valve system (15) in the injection-phase;
wherein the method comprises electrically driving the cylindrical reciprocal member (25) between the idle-phase position and the injection position.

## Patentansprüche

1. Schmiermittelinjektor für einen großen, langsam laufenden Zweitaktmotor, wobei der Injektor (4) umfasst:
- einen Schmiermitteleinlass (12) zum Aufnehmen von Schmiermittel von einer Schmiermittelzufuhrleitung (9);
- eine Düse (5) mit einer Düsenöffnung (5') zum Injizieren des Schmiermittels von dem Schmiermitteleinlass (12) in einen Zylinder (1) eines Motors in einer Injektionsphase;
- ein Auslassventilsystem (15) an der Düse (5) zum Öffnen und Schließen für den Durchfluss des Schmiermittels zur Düsenöffnung (5') während eines Injektionszyklus; wobei das Auslassventilsystem (15) dazu konfiguriert ist, sich für den Durchfluss des Schmiermittels zur Düsenöffnung (5') während einer Injektionsphase bei einem Druckanstieg über einen vorgegebenen Grenzwert am Auslassventilsystem (15) zu öffnen und das Auslassventilsystem (15) nach der Injektionsphase zu schließen;
- einen Schmiermittelflussweg von dem Schmiermitteleinlass (12) zu dem Auslassventilsystem (15) für den Durchfluss des Schmiermittels von dem Schmiermitteleinlass (12) zu der Düse (5), durch das Auslassventilsystem (15) und aus dem Injektor (4) an der Düsenöffnung (5'); und
- ein elektrisch angetriebenes Einlassventilsystem (13) zusätzlich zu dem Auslassventilsystem (15),
wobei das Einlassventilsystem in dem Schmiermittelflussweg zwischen dem Schmiermitteleinlass (12) und dem Auslassventilsystem (15) angeordnet ist, um das Schmiermittel, das durch die Düsenöffnung (5') abgegeben wird, durch Öffnen oder Schließen für den Schmiermittelfdurchfluss von dem Schmiermitteleinlass (12) zu dem Auslassventilsystem (15) in Abhängigkeit von einem elektrischen Steuersignal zu regulieren, das von einer Steuerung (11) empfangen wird;
wobei das Einlassventilsystem (13) stromaufwärts der Düse (5) und beabstandet von der Düse (5) und stromaufwärts des Auslassventilsystems (15) und beabstandet von dem Auslassventilsystem (15) angeordnet ist, **dadurch gekennzeichnet, dass** das Einlassventilsystem (13) für SIP-Schmiermittelinjektionen in den Zylinder bei einem Schmiermitteldruck im Bereich von 25 bar bis 100 bar angeordnet ist, dass das Einlassventilsystem (13) ein bewegliches, elektrisch angetriebenes Einlassventilelement (26, 26') umfasst, das so angeordnet ist, dass es sich von einer Leerlaufposition, in der das Einlassventilelement (26, 26') in der Leerlaufphase den Durchflussweg blockiert, in eine Injektionsphasenposition bewegt, in der das Einlassventilelement (26, 26') den Durchflussweg für den Durchfluss von Schmiermittel durch den Durchflussweg in der Injektionsphase öffnet, und dass das Einlassventilelement (26, 26') durch eine Einlassventilfeder (28) in eine Leerlaufposition vorgespannt ist, wobei das Einlassventilsystem (13) ein elektrisch angetriebenes starres Verschiebungselement (31) umfasst, um das Einlassventilelement (26, 26') gegen die Kraft der Einlassventilfeder (28) aus der Leerlaufposition in die Injektionsphasenposition zu verschieben, wobei das Verschiebungselement (31) ein Druckelement ist, das so angeordnet ist, dass es das Einlassventilelement (26) gegen die Kraft der Einlassventilfeder (28) aus seiner Leerlaufposition in seine Injektionsphasenposition zur Schmiermittelinjektion in der Injektionsphase drückt, wobei das Verschiebungselement (31) nicht an dem Einlassventilelement (26) befestigt ist; wobei das Verschiebungselement (31) im Leerlaufzustand in einem Abstand von dem Einlassventilelement (26) bereitgestellt und so angeordnet ist, dass es in Richtung des Einlassventilelements (26) beschleunigt wird, um vor dem Aufprall auf das Einlassventilelement (26) eine Geschwindigkeit zu erreichen und das Einlassventilelement (26) durch den Aufprall aus dem Einlassventilsitz (27) zu verschieben.

2. Injektor nach Anspruch 1, **dadurch gekennzeichnet, dass** das Einlassventilsystem (13) ein Einlassrückschlagventil (25) aufweist, das einen Einlassventilsitz (27) aufweist, gegen den das Einlassventilelement (26) in der Leerlaufphase von der Einlassventilfeder (28) zum Blockieren des Durchflusswegs durch das Einlassventilelement (26) vorgespannt ist, und wobei das Rückschlagventil (25) so angeordnet ist, dass in der Injektionsphase Schmiermittel von dem Schmiermitteleinlass (12) zu dem Auslassventilsystem (15) fließt, wenn das Einlassventilelement (26) während der Schmiermittelinjektion durch das elektrisch angetriebene starre Verschiebungselement (31) gegen die Kraft der Einlassventilfeder (28) aus dem Einlassventilsitz (27) verschoben wird.

3. Injektor nach Anspruch 1 oder 2, wobei das Einlassventilelement (26) ein hin- und hergehendes Element (26') ist; wobei das Einlassventilsystem (13) ein stationäres Ventilelement (53) umfasst, wobei das stationäre Ventilelement (53) eine zylindrische Buchse (54) umfasst, in der das elektrisch angetriebene zylindrische hin- und hergehende Element (26') mit einer Zylinderachse bereitgestellt ist, die einer Zylinderachse der Buchse (54) entspricht; wobei das hin- und hergehende Element (26') innerhalb der Buchse (54) entlang der Zylinderachse zwischen einer Leerlaufposition für die Leerlaufphase und einer Injektionsposition für die Injektionsphase hin- und herbewegbar ist;
wobei auf einer Seite der Buchse (54) ein erster Kanal (56) und auf einer anderen Seite der Buchse (54) ein zweiter Kanal (57) bereitgestellt ist, wobei der erste Kanal (56) mit dem Schmiermitteleinlass (12) und der zweite Kanal (57) mit dem Auslassventilsystem (15) kommuniziert;
wobei sich ein Querkanal (58) durch das stationäre Ventilelement (53) und durch die Buchse (54) erstreckt, um den ersten Kanal (56) mit dem zweiten Kanal (57) durch die Buchse (54) zu verbinden; wobei der Querkanal (58) einen ersten Querkanalabschnitt (58A), der den ersten Kanal (56) mit der Buchse (54) verbindet, und einen zweiten Querkanalabschnitt (58B), der die Buchse (54) mit dem zweiten Kanal (57) verbindet, aufweist;
wobei das hin- und hergehende Element (26') einen quer verlaufenden Durchgangsabschnitt (26A) für den Schmiermittelfluss durch oder um das hin- und hergehende Element (26') quer zu der Zylinderachse umfasst; wobei der Durchgangsabschnitt (26A) des hin- und hergehenden Elements (26') so angeordnet ist, dass er in der Leerlaufphasenposition vom Querkanal (58) entfernt ist, um den Querkanal (58) zu schließen und den Schmiermittelfluss von dem ersten Querkanalabschnitt (58A) zum zweiten Querkanalabschnitt (58B) zu verhindern; und wobei der Durchgangsabschnitt (26A) des hin- und hergehenden Elements (26') so angeordnet ist, dass er nur in der Injektionsphasenposition auf den Querkanal (58) ausgerichtet ist, damit der Schmierstoff in der Injektionsphase seriell vom Schmierstoffeinlass (12) durch den ersten Kanal (56), durch den ersten Querkanalabschnitt (58A), durch den Durchgangsabschnitt (26A), durch den zweiten Querkanalabschnitt (58B), durch den zweiten Kanal (57) und zum Auslassventilsystem (15) fließt.

4. Großer, langsam laufender Zweitaktmotor, umfassend einen Zylinder (1) mit einem hin- und hergehenden Kolben und mit einer Vielzahl von Injektoren (4), die entlang eines Umfangs des Zylinders (1) verteilt sind, um an verschiedenen Stellen des Umfangs Schmiermittel in den Zylinder (1) zu injizieren; wobei der Motor ferner eine Steuerung (11) zum Steuern der Menge und des Zeitpunkts der Schmiermittelinjektion durch mindestens einen der Injektoren (4) umfasst;
**dadurch gekennzeichnet, dass** jeder Injektor (4) ein Injektor nach einem der Ansprüche 1-3 ist.

5. Motor nach Anspruch 4, wobei das Einlassventilsystem (13) ein Einlassrückschlagventil (25) umfasst, das einen Einlassventilsitz (27) und das Einlassventilelement (26) umfasst, wobei das Einlassventilelement (26) in der Leerlaufphase durch die Einlassventilfeder (28) gegen einen Einlassventilsitz (27) zum Blockieren des Durchflusswegs durch das Einlassventilelement (26) vorgespannt ist, und wobei das Rückschlagventil (25) so angeordnet ist, dass in der Injektionsphase Schmiermittel von dem Schmiermitteleinlass (12) zu dem Auslassventilsystem (15) fließt, wenn das Einlassventilelement (26) während der Schmiermittelinjektion durch das elektrisch angetriebene starre Verschiebungselement (31) gegen die Kraft der Einlassventilfeder (28) aus dem Einlassventilsitz (27) verschoben wird.

6. Motor nach Anspruch 4, wobei das Einlassventilelement (26) ein hin- und hergehendes Element (26') ist; wobei das Einlassventilsystem (13) ein stationäres Ventilelement (53) umfasst, wobei das Ventilelement (53) eine zylindrische Buchse (54) umfasst, in der das elektrisch angetriebene zylindrische hin- und hergehende Element (26') mit einer Zylinderachse bereitgestellt ist, die einer Zylinderachse der Buchse (54) entspricht; wobei das hin- und hergehende Element (26') innerhalb der Buchse (54) entlang der Zylinderachse zwischen einer Leerlaufposition für die Leerlaufphase und einer Injektionsposition für die Injektionsphase hin- und herbewegbar ist;
wobei auf einer Seite der Buchse (54) ein erster Kanal (56) und auf einer anderen Seite der Buchse (54) ein zweiter Kanal (57) bereitgestellt ist, wobei der erste Kanal (56) mit dem Schmiermitteleinlass (12) und der zweite Kanal (57) mit dem Auslassventilsystem (15) kommuniziert;
wobei sich ein Querkanal (58) durch das stationäre Ventilelement (53) und durch die Buchse (54) erstreckt, um den ersten Kanal (56) mit dem zweiten Kanal (57) durch die Buchse (54) zu verbinden; wobei der Querkanal (58) einen ersten Querkanalabschnitt (58A), der den ersten Kanal (56) mit der Buchse (54) verbindet, und einen zweiten Querkanalabschnitt (58B), der die Buchse (54) mit dem zweiten Kanal (57) verbindet, aufweist;
wobei das hin- und hergehende Element (26') einen quer verlaufenden Durchgangsabschnitt (26A) für den Schmiermittelfluss durch oder um das hin- und hergehende Element (26') quer zur Zylinderachse umfasst; wobei der Durchgangsabschnitt (26A) des hin- und hergehenden Elements (26') so angeordnet ist, dass er in der Leerlaufphasenposition vom Querkanal (58) entfernt ist, um den Querkanal (58) zu schließen und den Schmiermittelfluss vom ersten Querkanalabschnitt (58A) zum zweiten Querkanalabschnitt (58B) zu verhindern; und wobei der Durchgangsabschnitt (26A) des hin- und hergehenden Elements (26') so angeordnet ist, dass er nur in der Injektionsposition mit dem Querkanal (58) ausgerichtet ist, damit der Schmierstoff in der Injektionsphase seriell vom Schmierstoffeinlass (12) durch den ersten Kanal (56), durch den ersten Querkanalabschnitt (58A), durch den Durchgangsabschnitt (26A), durch den zweiten Querkanalabschnitt (58B), durch den zweiten Kanal (57) und zum Auslassventilsystem (15) fließt.

7. Verfahren zum Schmieren eines großen, langsam laufenden Zweitaktmotors, umfassend einen Zylinder (1) mit einem hin- und hergehenden Kolben und mit einer Vielzahl von Injektoren (4), die entlang eines Umfangs des Zylinders (1) verteilt sind, um an verschiedenen Stellen des Umfangs in einer Injektionsphase Schmiermittel in den Zylinder (1) zu injizieren; wobei der Motor ferner eine Steuerung (11) zum Steuern der Menge und des Zeitpunkts der Schmiermittelinjektion durch mindestens einen der Injektoren (4) umfasst;
wobei jeder Injektor (4) Folgendes umfasst:
- einen Schmiermitteleinlass (12) zum Aufnehmen von Schmiermittel von einer Schmiermittelzufuhrleitung (9);
- eine Düse (5) mit einer sich in den Zylinder (1) erstreckenden Düsenöffnung (5') zum Injizieren des Schmiermittels von dem Schmiermitteleinlass (4A) in den Zylinder (1) in der Injektionsphase;
- ein Auslassventilsystem (15) an der Düse (5) zum Öffnen und Schließen für den Durchfluss des Schmiermittels zur Düsenöffnung (5') während eines Injektionszyklus; wobei das Auslassventilsystem (15) dazu konfiguriert ist, sich für den Durchfluss des Schmiermittels zur Düsenöffnung (5') während einer Injektionsphase bei einem Druckanstieg über einen vorgegebenen Grenzwert am Auslassventilsystem (15) zu öffnen und das Auslassventilsystem (15) nach der Injektionsphase zu schließen;
- einen Schmiermittelflussweg von dem Schmiermitteleinlass (12) zu dem Auslassventilsystem (15) für den Durchfluss des Schmiermittels von dem Schmiermitteleinlass (12) und zu der Düse (5), durch das Auslassventilsystem (15) und aus dem Injektor (4) an der Düsenöffnung (5'),
wobei jeder Injektor (4) zusätzlich zu dem Auslassventilsystem (15) ein elektrisch angetriebenes Einlassventilsystem (13) umfasst, wobei das Einlassventilsystem elektrisch mit der Steuerung (11) verbunden und in dem Schmiermittelflussweg zwischen dem Schmiermitteleinlass (12) und dem Auslassventilsystem (15) angeordnet ist, um das Schmiermittel, das durch die Düsenöffnung (5') abgegeben wird, durch Öffnen oder Schließen des Schmiermittelflusses von dem Schmiermitteleinlass (12) zum Auslassventilsystem (15) in Abhängigkeit von einem elektrischen Steuersignal, das von der Steuerung (11) empfangen wird, zu regulieren; wobei das Einlassventilsystem (13) stromaufwärts von der Düse (5) und beabstandet von der Düse (5) und stromaufwärts von dem Auslassventilsystem (15) und beabstandet von dem Auslassventilsystem (15) angeordnet ist;
wobei das Verfahren Senden eines elektrischen Steuersignals von der Steuerung (11) an das elektrisch angetriebene Einlassventilsystem (13) zum Starten einer Injektionsphase und als Folge davon Bewirken eines Schmiermittelflusses von der Schmiermittelzufuhrleitung (9) durch den Schmiermitteleinlass (12), durch das Einlassventilsystem (13) und in eine Leitung (16') umfasst, die das Einlassventilsystem (13) mit dem Auslassventilsystem (15) verbindet, dadurch, dass der Schmiermittelfluss in die Leitung (16') den Druck in der Leitung (16') und am Auslassventilsystem (15) erhöht, dass der Druckanstieg bewirkt, dass sich das Auslassventilsystem (15) öffnet, damit Schmiermittel aus der Leitung (16') zu der Düsenöffnung (5') fließen kann, und dass Schmiermittel durch die Düsenöffnung (5') in den Zylinder (1) injiziert wird; am Ende der Injektionsphase das elektrische Steuersignal von der Steuerung (11) zum Einlassventilsystem (13) zu ändern und das Einlassventilsystem (13) zu veranlassen, sich für die Schmiermittelzufuhr vom Schmiermitteleinlass (12) zur Leitung (16') zu schließen, **dadurch gekennzeichnet, dass** das Einlassventilsystem (13) für SIP-Schmiermittelinjektionen in den Zylinder bei einem Schmiermitteldruck im Bereich von 25 bar bis 100 bar eingerichtet ist, dass das Einlassventilsystem (13) ein bewegliches und elektrisch angetriebenes starres Einlassventilelement (26, 26') umfasst, das so angeordnet ist, dass es sich von einer Position in der Leerlaufphase, in der das Einlassventilelement (26) in der Leerlaufphase den Durchflussweg blockiert, in eine Position in der Injektionsphase bewegt, in der das Einlassventilelement (26) den Durchflussweg für den Durchfluss von Schmiermittel durch den Durchflussweg in der Injektionsphase öffnet; wobei das Verfahren umfasst, dass das Einlassventilsystem ein Steuersignal von der Steuerung empfängt und als Folge des Empfangs des Steuersignals das Einlassventilelement (26) für die Injektionsphase von der Leerlaufposition in die Injektionsphasenposition verlagert und einen Schmiermittelfluss von der Schmiermittelzufuhrleitung (9) durch den Schmiermitteleinlass (12) zu der Düsen- (5) Injektionsphase bewirkt, und nach der Injektionsphase das Zurückziehen des Verschiebungselement (31), um das Einlassventilelement in die Leerlaufposition zurückkehren zu lassen und die Schmiermittelzufuhr vom Schmiermitteleinlass (12) zur Leitungs- (16') Injektionsphase zu schließen und dass das Einlassventilelement (26, 26') durch eine Einlassventilfeder (28) in eine Leerlaufposition vorgespannt wird, wobei das Einlassventilsystem (13) ferner ein elektrisch angetriebenes starres Verschiebungselement (31) umfasst, um das Einlassventilelement (26, 26') gegen die Kraft der Feder (28) von der Leerlaufposition in die Injektionsposition zu verschieben, wobei das Verschiebungselement (31) ein Schiebeelement ist und das Verfahren das Wegschieben des Einlassventilelements (26) von der Leerlaufposition durch das Verschiebungselement (31) gegen die Kraft der Einlassventilfeder (28) während der Schmiermittelinjektion umfasst, wobei das Verschiebungselement (31) nicht an dem Einlassventilelement (26) befestigt ist; wobei das Verschiebungselement (31) im Leerlaufzustand in einem Abstand zum Einlassventilelement (26) angeordnet ist; und wobei das Verfahren Bewirken, durch das Steuersignal, einer Beschleunigung des Verschiebungselements (31) in Richtung des Einlassventilelements (26), Erreichen einer Geschwindigkeit vor dem Aufprall auf das Einlassventilelement (26) und Verschieben des Einlassventilelements (26) aus der Leerlaufposition durch den Aufprall, Beibehalten des aus der Leerlaufposition verschobenen Einlassventilelements für eine vorbestimmte Zeitspanne und anschließendes Umkehren der Bewegung des Verschiebungselements (31) und Bewirken der Rückkehr des Einlassventilelements (26) in die Leerlaufposition umfasst.

8. Verfahren nach Anspruch 7, wobei das Einlassventilelement (26) ein hin- und hergehendes Element (26') ist; wobei das Einlassventilsystem (13) ein stationäres Ventilelement (53) umfasst, wobei das Ventilelement (53) eine zylindrische Buchse (54) umfasst, in der das elektrisch angetriebene zylindrische hin- und hergehende Element (26') mit einer Zylinderachse bereitgestellt ist, die einer Zylinderachse der Buchse (54) entspricht; wobei das hin- und hergehende Element (26') innerhalb der Buchse (54) entlang der Zylinderachse zwischen einer Leerlaufposition für die Leerlaufphase und einer Injektionsposition für die Injektionsphase hin- und herbewegbar ist;
wobei auf einer Seite der Buchse (54) ein erster Kanal (56) und auf einer anderen Seite der Buchse (54) ein zweiter Kanal (57) bereitgestellt ist, wobei der erste Kanal (56) mit dem Schmiermitteleinlass (12) und der zweite Kanal (57) mit dem Auslassventilsystem (15) kommuniziert;
wobei sich ein Querkanal (58) durch das stationäre Ventilelement (53) und durch die Buchse (54) erstreckt, um den ersten Kanal (56) mit dem zweiten Kanal (57) durch die Buchse (54) zu verbinden; wobei der Querkanal (58) einen ersten Querkanalabschnitt (58A), der den ersten Kanal (56) mit der Buchse (54) verbindet, und einen zweiten Querkanalabschnitt (58B), der die Buchse (54) mit dem zweiten Kanal (57) verbindet, aufweist;
wobei das hin- und hergehende Element (26') einen quer verlaufenden Durchgangsabschnitt (26A) für den Schmiermittelfluss durch oder um das hin- und hergehende Element (26') quer zur Zylinderachse umfasst; wobei der Durchgangsabschnitt (26A) des hin- und hergehenden Elements (26') so angeordnet ist, dass er in der Leerlaufphasenposition vom Querkanal (58) entfernt ist, um den Querkanal (58) zu schließen und den Schmiermittelfluss vom ersten Querkanalabschnitt (58A) zum zweiten Querkanalabschnitt (58B) zu verhindern; und wobei der Durchgangsabschnitt (26A) des hin- und hergehenden Elements (26') so angeordnet ist, dass er nur in der Injektionsposition mit dem Querkanal (58) ausgerichtet ist, damit der Schmierstoff in der Injektionsphase seriell vom Schmierstoffeinlass (12) durch den ersten Kanal (56), durch den ersten Querkanalabschnitt (58A), durch den Durchgangsabschnitt (26A), durch den zweiten Querkanalabschnitt (58B), durch den zweiten Kanal (57) und zum Auslassventilsystem (15) fließt;
wobei das Verfahren den elektrischen Antrieb des zylindrischen Kolbenelements (25) zwischen der Leerlaufposition und der Injektionsposition umfasst.

## Revendications

1. Injecteur de lubrifiant pour un gros moteur lent à deux temps, dans lequel l'injecteur (4) comprend
- une entrée de lubrifiant (12) pour recevoir du lubrifiant d'un conduit d'alimentation en lubrifiant (9) ;
- une tuyère (5) avec une ouverture de tuyère (5') pour injecter le lubrifiant depuis l'entrée de lubrifiant (12) dans un cylindre (1) d'un moteur en phase d'injection ;
- un système de soupape de sortie (15) au niveau de la tuyère (5) pour ouvrir et fermer l'écoulement du lubrifiant vers l'ouverture de tuyère (5') pendant un cycle d'injection ; le système de soupape de sortie (15) étant configuré pour s'ouvrir pour permettre l'écoulement du lubrifiant vers l'ouverture de tuyère (5') pendant une phase d'injection lors d'une augmentation de pression au-dessus d'une limite prédéterminée au niveau du système de soupape de sortie (15) et pour fermer le système de soupape de sortie (15) après la phase d'injection ;
- un trajet d'écoulement de lubrifiant de l'entrée de lubrifiant (12) au système de soupape de sortie (15) pour l'écoulement du lubrifiant de l'entrée de lubrifiant (12) et vers la tuyère (5), à travers le système de soupape de sortie (15) et hors de l'injecteur (4) au niveau de l'ouverture de tuyère (5') ; et
- un système de soupape d'entrée (13) électriquement entraîné en plus du système de soupape de sortie (15),
dans lequel le système de soupape d'entrée est disposé dans le trajet d'écoulement de lubrifiant entre l'entrée de lubrifiant (12) et le système de soupape de sortie (15) pour réguler le lubrifiant qui est distribué à travers l'ouverture de tuyère (5') par l'ouverture ou la fermeture permettant un écoulement de lubrifiant de l'entrée de lubrifiant (12) au système de soupape de sortie (15) en fonction d'un signal de commande électrique reçu d'un dispositif de commande (11) ;
dans lequel le système de soupape d'entrée (13) est disposé en amont de la tuyère (5) et espacé de la tuyère (5) et en amont du système de soupape de sortie (15) et espacé du système de soupape de sortie (15), **caractérisé en ce que** le système de soupape d'entrée (13) est agencé pour des injections de lubrifiant SIP dans le cylindre à une pression de lubrifiant comprise dans la plage de 25 bars à 100 bars, le système de soupape d'entrée (13) comprenant un élément de soupape d'entrée (26, 26') mobile et électriquement entraîné, agencé pour se déplacer d'une position de phase de repos, dans laquelle l'élément de soupape d'entrée (26, 26') dans la phase de repos bloque le trajet d'écoulement, vers une position de phase d'injection, dans laquelle l'élément de soupape d'entrée (26, 26') ouvre le trajet d'écoulement pour l'écoulement de lubrifiant à travers le trajet d'écoulement dans la phase d'injection et dans laquelle l'élément de soupape d'entrée (26, 26') est précontraint dans une position de phase de repos par un ressort de soupape d'entrée (28), dans lequel le système de soupape d'entrée (13) comprend un élément de déplacement rigide (31) électriquement entraîné pour déplacer l'élément de soupape d'entrée (26, 26') de la position de phase de repos à la position de phase d'injection à l'encontre de la force du ressort de soupape d'entrée (28), dans lequel l'élément de déplacement (31) est un élément de poussée agencé pour pousser l'élément de soupape d'entrée (26) à l'opposé de sa position de phase de repos à l'encontre de la force du ressort de soupape d'entrée (28) à sa position de phase d'injection pour une injection de lubrifiant dans la phase d'injection, dans lequel l'élément de déplacement (31) n'est pas fixé à l'élément de soupape d'entrée (26) ; dans lequel l'élément de déplacement (31) dans l'état de repos est disposé à distance de l'élément de soupape d'entrée (26) et agencé pour une accélération vers l'élément de soupape d'entrée (26) pour obtenir une vitesse avant l'impact sur l'élément de soupape d'entrée (26) pour déplacer l'élément de soupape d'entrée (26) depuis le siège de soupape d'entrée (27) par l'impact.

2. Injecteur selon la revendication 1, dans lequel le système de soupape d'entrée (13) comprend une soupape anti-retour d'entrée (25) qui comprend un siège de soupape d'entrée (27) contre lequel l'élément de soupape d'entrée (26) est précontraint par le ressort de soupape d'entrée (28) en phase de repos pour bloquer le trajet d'écoulement par l'élément de soupape d'entrée (26), et dans lequel la soupape anti-retour (25) est agencée pour le débit de lubrifiant de l'entrée de lubrifiant (12) au système de soupape de sortie (15) en phase d'injection lors du déplacement de l'élément de soupape d'entrée (26) à partir du siège de soupape d'entrée (27) à l'encontre de la force du ressort de soupape d'entrée (28) par l'élément de déplacement rigide (31) électriquement entraîné pendant l'injection de lubrifiant.

3. Injecteur selon la revendication 1 ou 2, dans lequel l'élément de soupape d'entrée (26) est un élément réciproque (26') ; dans lequel le système de soupape d'entrée (13) comprend un élément de soupape fixe (53), l'élément de soupape fixe (53) comprenant une douille cylindrique (54) à l'intérieur de laquelle l'élément réciproque cylindrique (26') électriquement entraîné est pourvu d'un axe de cylindre égal à un axe de cylindre de la douille (54) ; dans lequel l'élément réciproque (26') est mobile réciproquement à l'intérieur de la douille (54) le long de l'axe de cylindre entre une position de phase de repos pour la phase de repos et une position d'injection pour la phase d'injection ;
dans lequel un premier canal (56) est prévu d'un côté de la douille (54) et un second canal (57) est prévu de l'autre côté de la douille (54), dans lequel le premier canal (56) communique avec l'entrée de lubrifiant (12) et le second canal (57) communique avec le système de soupape de sortie (15) ;
dans lequel un canal transversal (58) traverse l'élément de soupape fixe (53) et la douille (54) pour relier le premier canal (56) au second canal (57) à travers la douille (54) ; le canal transversal (58) présentant une première section de canal transversal (58A) reliant le premier canal (56) à la douille (54) et une seconde section de canal transversal (58B) reliant la douille (54) au second canal (57) ;
dans lequel l'élément réciproque (26') comprend une section de débit transversal (26A) pour l'écoulement de lubrifiant à travers ou autour de l'élément réciproque (26') transversalement à l'axe de cylindre ; dans lequel la section de débit (26A) de l'élément réciproque (26') est agencée pour être éloignée du canal transversal (58) dans la position de phase de repos pour fermer le canal transversal (58) et empêcher l'écoulement de lubrifiant de la première section de canal transversal (58A) à la seconde section de canal transversal (58B) ; et dans lequel la section de débit (26A) de l'élément réciproque (26') est agencée pour être alignée avec le canal transversal (58) uniquement dans la position de phase d'injection pour un écoulement de lubrifiant en série depuis l'entrée de lubrifiant (12) à travers le premier canal (56) à travers la première section de canal transversal (58A) à travers la section de débit (26A) à travers la seconde section de canal transversal (58B) à travers le second canal (57) et vers le système de soupape de sortie (15) dans la phase d'injection.

4. Gros moteur lent à deux temps comprenant un cylindre (1) avec un piston réciproque à l'intérieur et avec une pluralité d'injecteurs (4) répartis le long d'un périmètre du cylindre (1) pour l'injection de lubrifiant dans le cylindre (1) à diverses positions sur le périmètre ; le moteur comprenant en outre un dispositif de commande (11) qui est configuré pour commander la quantité et la synchronisation de l'injection de lubrifiant par au moins l'un des injecteurs (4) ;
**caractérisé en ce que** chaque injecteur (4) est un injecteur selon l'une quelconque des revendications 1 à 3.

5. Moteur selon la revendication 4, dans lequel le système de soupape d'entrée (13) comprend une soupape anti-retour d'entrée (25) qui comprend un siège de soupape d'entrée (27) et l'élément de soupape d'entrée (26), dans lequel l'élément de soupape d'entrée (26) est précontraint contre un siège de soupape d'entrée (27) par le ressort de soupape d'entrée (28) en phase de repos pour bloquer le trajet d'écoulement par l'élément de soupape d'entrée (26), et dans lequel la soupape anti-retour (25) est agencée pour le débit de lubrifiant de l'entrée de lubrifiant (12) au système de soupape de sortie (15) en phase d'injection lors du déplacement de l'élément de soupape d'entrée (26) à partir du siège de soupape d'entrée (27) à l'encontre de la force du ressort de soupape d'entrée (28) par l'élément de déplacement rigide (31) électriquement entraîné pendant l'injection de lubrifiant.

6. Moteur selon la revendication 4, dans lequel l'élément de soupape d'entrée (26) est un élément réciproque (26') ; dans lequel le système de soupape d'entrée (13) comprend un élément de soupape fixe (53), l'élément de soupape (53) comprenant une douille cylindrique (54) à l'intérieur de laquelle l'élément réciproque cylindrique (26') électriquement entraîné est pourvu d'un axe de cylindre égal à un axe de cylindre de la douille (54) ; dans lequel l'élément réciproque (26') est mobile réciproquement à l'intérieur de la douille (54) le long de l'axe de cylindre entre une position de phase de repos pour la phase de repos et une position d'injection pour la phase d'injection ;
dans lequel un premier canal (56) est prévu d'un côté de la douille (54) et un second canal (57) est prévu de l'autre côté de la douille (54), dans lequel le premier canal (56) communique avec l'entrée de lubrifiant (12) et le second canal (57) communique avec le système de soupape de sortie (15) ;
dans lequel un canal transversal (58) traverse l'élément de soupape fixe (53) et la douille (54) pour relier le premier canal (56) au second canal (57) à travers la douille (54) ; le canal transversal (58) présentant une première section de canal transversal (58A) reliant le premier canal (56) à la douille (54) et une seconde section de canal transversal (58B) reliant la douille (54) au second canal (57) ;
dans lequel l'élément réciproque (26') comprend une section de débit transversal (26A) pour l'écoulement de lubrifiant à travers ou autour de l'élément réciproque (26') transversalement à l'axe de cylindre ; dans lequel la section de débit (26A) de l'élément réciproque (26') est agencée pour être éloignée du canal transversal (58) dans la position de phase de repos pour fermer le canal transversal (58) et empêcher l'écoulement de lubrifiant de la première section de canal transversal (58A) à la seconde section de canal transversal (58B) ; et dans lequel la section de débit (26A) de l'élément réciproque (26') est agencée pour être alignée avec le canal transversal (58) uniquement dans la position d'injection pour un écoulement de lubrifiant en série depuis l'entrée de lubrifiant (12) à travers le premier canal (56) à travers la première section de canal transversal (58A) à travers la section de débit (26A) à travers la seconde section de canal transversal (58B) à travers le second canal (57) et vers le système de soupape de sortie (15) dans la phase d'injection.

7. Procédé de lubrification d'un gros moteur lent à deux temps comprenant un cylindre (1) avec un piston réciproque à l'intérieur et avec une pluralité d'injecteurs (4) répartis le long d'un périmètre du cylindre (1) pour l'injection de lubrifiant dans le cylindre (1) à diverses positions sur le périmètre pendant une phase d'injection ; le moteur comprenant en outre un dispositif de commande (11) pour commander la quantité et la synchronisation de l'injection de lubrifiant par au moins l'un des injecteurs (4) ;
dans lequel chaque injecteur (4) comprend
- une entrée de lubrifiant (12) pour recevoir du lubrifiant d'un conduit d'alimentation en lubrifiant (9) ;
- une tuyère (5) avec une ouverture de tuyère (5') s'étendant dans le cylindre (1) conçue pour injecter du lubrifiant de l'entrée de lubrifiant (12) dans le cylindre (1) dans la phase d'injection ;
- un système de soupape de sortie (15) au niveau de la tuyère (5) pour ouvrir et fermer l'écoulement du lubrifiant vers l'ouverture de tuyère (5') pendant un cycle d'injection ; le système de soupape de sortie (15) étant configuré pour s'ouvrir pour permettre l'écoulement du lubrifiant vers l'ouverture de tuyère (5') pendant une phase d'injection lors d'une augmentation de pression au-dessus d'une limite prédéterminée au niveau du système de soupape de sortie (15) et pour fermer le système de soupape de sortie (15) après la phase d'injection ;
- un trajet d'écoulement de lubrifiant allant de l'entrée de lubrifiant (12) au système de soupape de sortie (15) pour l'écoulement du lubrifiant depuis l'entrée de lubrifiant (12) et vers la tuyère (5), à travers le système de soupape de sortie (15) et hors de l'injecteur (4) au niveau de l'ouverture de tuyère (5').
dans lequel chaque injecteur (4) comprend un système de soupape d'entrée (13) électriquement entraîné en plus du système de soupape de sortie (15), dans lequel le système de soupape d'entrée est électriquement connecté au dispositif de commande (11) et disposé dans le trajet d'écoulement de lubrifiant entre l'entrée de lubrifiant (12) et le système de soupape de sortie (15) pour réguler le lubrifiant qui est distribué à travers l'ouverture de tuyère (5') par l'ouverture ou la fermeture permettant un écoulement de lubrifiant de l'entrée de lubrifiant (12) au système de soupape de sortie (15) en fonction d'un signal de commande électrique reçu du dispositif de commande (11) ; dans lequel le système de soupape d'entrée (13) est disposé en amont de la tuyère (5) et espacé de la tuyère (5) et en amont du système de soupape de sortie (15) et espacé du système de soupape de sortie (15) ;
le procédé comprend l'envoi d'un signal de commande électrique du dispositif de commande (11) au système de soupape d'entrée (13) électriquement entraîné pour démarrer une phase d'injection, et en conséquence provoquer un écoulement de lubrifiant à partir du conduit d'alimentation en lubrifiant (9) à travers l'entrée de lubrifiant (12), à travers le système de soupape d'entrée (13), et dans un conduit (16') qui relie en écoulement le système de soupape d'entrée (13) au système de soupape de sortie (15), par l'écoulement de lubrifiant dans le conduit (16') augmentant la pression dans le conduit (16') et au système de soupape de sortie (15), par l'augmentation de pression provoquant l'ouverture du système de soupape de sortie (15) pour l'écoulement de lubrifiant du conduit (16') à l'ouverture de tuyère (5') et l'injection de lubrifiant dans le cylindre (1) à travers l'ouverture de tuyère (5') ; à la fin de la phase d'injection, le changement du signal de commande électrique du dispositif de commande (11) au système de soupape d'entrée (13) et le fait de provoquer la fermeture du système de soupape d'entrée (13) pour l'alimentation en lubrifiant de l'entrée de lubrifiant (12) au conduit (16') **caractérisé en ce que** le système de soupape d'entrée (13) est agencé pour des injections de lubrifiant SIP dans le cylindre à une pression de lubrifiant comprise dans la plage de 25 bars à 100 bars, **en ce que** le système de soupape d'entrée (13) comprend un élément de soupape d'entrée rigide (26, 26') mobile et électriquement entraîné agencé pour se déplacer d'une position de phase de repos, dans laquelle l'élément de soupape d'entrée (26) dans la phase de repos bloque le trajet d'écoulement, à une position de phase d'injection, dans laquelle l'élément de soupape d'entrée (26) ouvre le trajet d'écoulement pour un écoulement de lubrifiant à travers le trajet d'écoulement dans la phase d'injection ; le procédé comprenant la réception d'un signal de commande provenant du dispositif de commande par le système de soupape d'entrée et, en conséquence de la réception du signal de commande, le déplacement de l'élément de soupape d'entrée (26) de la position de phase de repos à la position de phase d'injection pour la phase d'injection et le fait de provoquer l'écoulement de lubrifiant du conduit d'alimentation en lubrifiant (9) à travers l'entrée de lubrifiant (12) vers la tuyère (5) de phase d'injection et, après la phase d'injection, la rétractation de l'élément de déplacement (31) pour provoquer le retour de l'élément de soupape d'entrée vers la position de phase de repos et fermer l'alimentation en lubrifiant de l'entrée de lubrifiant (12) vers le conduit (16') de phase d'injection, et l'élément de soupape d'entrée (26, 26') est précontraint dans une position de phase d'injection par le ressort de soupape d'entrée (28), dans lequel le système de soupape d'entrée (13) comprend en outre un élément de déplacement rigide (31) électriquement entraîné pour déplacer l'élément de soupape d'entrée (26, 26') de la position de phase de repos à la position de phase d'injection à l'encontre de la force du ressort (28), dans lequel l'élément de déplacement (31) est un élément de poussée et le procédé comprend la poussée de l'élément de soupape d'entrée (26) à l'opposé de la position de phase de repos par l'élément de déplacement (31) à l'encontre de la force du ressort de soupape d'entrée (28) pendant l'injection de lubrifiant, dans lequel l'élément de déplacement (31) n'est pas fixé à l'élément de soupape d'entrée (26) ; dans lequel l'élément de déplacement (31) dans l'état de repos est disposé à une certaine distance de l'élément de soupape d'entrée (26) ; et dans lequel le procédé comprend, par le signal de commande, l'accélération de l'élément de déplacement (31) vers l'élément de soupape d'entrée (26), l'obtention d'une vitesse avant l'impact avec l'élément de soupape d'entrée (26), et le déplacement de l'élément de soupape d'entrée (26) de la position de phase de repos par l'impact, le maintien de l'élément de soupape d'entrée déplacé de la position de phase de repos pendant une période de temps prédéterminée, et l'inversion ensuite du mouvement de l'élément de déplacement (31) et le fait d'amener l'élément de soupape d'entrée (26) à revenir à la position de phase de repos.

8. Procédé selon la revendication 7, dans lequel l'élément de soupape d'entrée (26) est un élément réciproque (26') ; dans lequel le système de soupape d'entrée (13) comprend un élément de soupape fixe (53), l'élément de soupape (53) comprenant une douille cylindrique (54) à l'intérieur de laquelle l'élément réciproque cylindrique (26') électriquement entraîné est pourvu d'un axe de cylindre égal à un axe de cylindre de la douille (54) ; dans lequel l'élément réciproque (26') est mobile réciproquement à l'intérieur de la douille (54) le long de l'axe de cylindre entre une position de phase de repos pour la phase de repos et une position d'injection pour la phase d'injection ;
dans lequel un premier canal (56) est prévu d'un côté de la douille (54) et un second canal (57) est prévu de l'autre côté de la douille (54), dans lequel le premier canal (56) communique avec l'entrée de lubrifiant (12) et le second canal (57) communique avec le système de soupape de sortie (15) ;
dans lequel un canal transversal (58) traverse l'élément de soupape fixe (53) et la douille (54) pour relier le premier canal (56) au second canal (57) à travers la douille (54) ; le canal transversal (58) présentant une première section de canal transversal (58A) reliant le premier canal (56) à la douille (54) et une seconde section de canal transversal (58B) reliant la douille (54) au second canal (57) ;
dans lequel l'élément réciproque (26') comprend une section de débit transversal (26A) pour l'écoulement de lubrifiant à travers ou autour de l'élément réciproque (26') transversalement à l'axe de cylindre ; dans lequel la section de débit (26A) de l'élément réciproque (26') est agencée pour être éloignée du canal transversal (58) dans la position de phase de repos pour fermer le canal transversal (58) et empêcher l'écoulement de lubrifiant de la première section de canal transversal (58A) à la seconde section de canal transversal (58B) ; et dans lequel la section de débit (26A) de l'élément réciproque (26') est agencée pour être alignée avec le canal transversal (58) uniquement dans la position d'injection pour un écoulement de lubrifiant en série depuis l'entrée de lubrifiant (12) à travers le premier canal (56) à travers la première section de canal transversal (58A) à travers la section de débit (26A) à travers la seconde section de canal transversal (58B) à travers le second canal (57) et vers le système de soupape de sortie (15) dans la phase d'injection ;
dans lequel le procédé comprend l'entraînement électrique de l'élément réciproque cylindrique (25) entre la position de phase de repos et la position d'injection.
